# EUROPÄISCHE PATENTSCHRIFT

(11) **EP 4 073 476 B1**
(45) Veröffentlichungstag und Bekanntmachung des Hinweises auf die Patenterteilung: **07.05.2025**
(21) Anmeldenummer: 20829823.2
(22) Anmeldetag: 11.12.2020
(51) Int. Cl.: G01F 23/263, G01N 35/10, B01L 3/02, G01F 11/02

(54) **PIPETTIEREINHEIT MIT KAPAZITIVER FLÜSSIGKEITSDETEKTION, KOMBINATION EINER SOLCHEN PIPETTIEREINHEIT UND EINER PIPETTIERSPITZE, UND VERFAHREN ZUM KAPAZITIVEN DETEKTIEREN VON PIPETTIERFLÜSSIGKEIT**
PIPETTING UNIT WITH CAPACITIVE LIQUID DETECTION FUNCTION, COMBINATION OF SUCH A PIPETTING UNIT AND A PIPETTE TIP, AND METHOD FOR CAPACITIVELY DETECTING PIPETTING LIQUID
UNITÉ DE PIPETAGE À DÉTECTION DE LIQUIDE CAPACITIVE, COMBINAISON D'UNE UNITÉ DE PIPETAGE DE CE TYPE ET D'UNE POINTE DE PIPETAGE, ET PROCÉDÉ DE DÉTECTION CAPACITIVE DE LIQUIDE DE PIPETAGE

(30) Priorität: 12.12.2019 DE 102019134200
(43) Veröffentlichungstag der Anmeldung: 19.10.2022
(73) Patentinhaber: Hamilton Bonaduz AG, 7402 Bonaduz (CH)
(72) Erfinder: GYSEL, Fridolin, 8134 Adliswil (CH); ETTINGER, Reto, 8610 Uster (CH); WALPEN, Silvio, 8810 Thalwil (CH)
(74) Vertreter: Schmitt-Nilson Schraud Waibel Wohlfrom Patentanwälte Partnerschaft mbB
(86) Internationale Anmeldenummer: PCT/EP2020/085764
(87) Internationale Veröffentlichungsnummer: WO 2021/116408

(56) Entgegenhaltungen:
- EP-A1- 2 869 030
- EP-A1- 3 455 596
- EP-A1- 3 501 654
- EP-A2- 0 819 942
- EP-A2- 2 230 521
- EP-B1- 0 819 942
- EP-B1- 3 455 596
- WO-A1-2018/015422
- WO-A1-2019/011698
- US-A1- 2012 114 526
- US-B1- 6 551 558

## Beschreibung

Die vorliegende Erfindung ist auf dem Gebiet von Pipettiersystemen und deren Komponenten. Insbesondere betrifft die vorliegende Erfindung Pipettiersysteme, bei denen Pipettierflüssigkeit aspiriert bzw. dispensiert wird und bei denen der Kontakt zwischen Pipettierspitze und Pipettierflüssigkeit detektiert werden kann.

Moderne Pipettiersysteme sind hoch komplexe technische Systeme. Sie sind darauf ausgelegt, sehr kleine Mengen an Pipettierflüssigkeit in hoher Geschwindigkeit und mit hoher Genauigkeit zu aspirieren und zu dispensieren. Dabei sind oft eine Vielzahl von Pipettierspitzen in einem Rastar angeordnet, um eine Vielzahl von Pipettieroperationen gleichzeitig ausführen zu können. Um eine hohe Genauigkeit zu erreichen, gab es in der Vergangenheit Ansätze, den Füllstand der Pipettierflüssigkeit in einem Behältnis zu detektieren und die Pipettieroperation auf den Füllstand in dem Behältnis, aus dem aspiriert bzw. in das dispensiert werden soll, abzustimmen. Die bisherigen Ansätze sind allerdings nicht in jeglicher Hinsicht zufriedenstellend.

EP 2 869 030 A1 offenbart ein Verfahren zum Einstellen einer Position eines Ansaugmittels in einer Probenverarbeitungsvorrichtung, wobei das Probenverarbeitungsgerät das Ansaugmittel zum Ansaugen einer Probe oder eines Reagens aus einem Behälter und einen an dem Ansaugmittel vorgesehenen Kapazitätssensor umfasst, wobei das Verfahren umfasst: Bewegen die Ansaugeinrichtung über der Positionseinstelleinrichtung, die elektrisch leitfähig ist und an einer vorbestimmten Position angeordnet ist, Erhalten einer durch den Kapazitätssensor erfassten Kapazität, während das Ansaugmittel bewegt wird; und Einstellen von Referenzpositionsinformationen, die eine Referenzposition der Ansaugeinrichtung angeben, basierend auf einer Änderung in der erhaltenen Kapazität.

EP 3 455 596 A1 offenbart eine werkzeuglose und automatisierte Verbindung zwischen einer Transfersonde und einer gedruckten Schaltungsanordnung (PCA) zur kapazitiven Flüssigkeitsstandserkennung zur Verwendung in einem klinischen Analysegerät in einer In-vitro-Diagnose(IVD)-Umgebung in einem Krankenhaus oder Labor.

EP 2 230 521 A2 offenbart ein Verfahren zum Erfassen eines Fluidflusses durch eine Leitung aufgrund des Betriebs einer Fluidpumpe, um zu bestimmen, ob eine vorbestimmte Menge eines Fluids durch die Leitung durch den Betrieb der Pumpe bewegt wurde.

EP 3 501 654 A1 offenbart eine Pipettiervorrichtung und ein Verfahren, die in der Lage sind, eine Flüssigkeit innerhalb eines Zwischenabschnitts eines Pipettenrohrs der Pipettiervorrichtung zu erfassen. Der Zwischenabschnitt befindet sich zwischen einem oberen Abschnitt des Pipettenrohrs, an dem eine erste Elektrode angeordnet ist, und einem unteren Abschnitt, an dem eine zweite Elektrode angeordnet ist.

Demzufolge wäre es wünschenswert, eine Pipettiereinheit mit Flüssigkeitsdetektion und ein Verfahren zum Detektieren von Pipettierflüssigkeit bereitzustellen, die eine effektive und zuverlässige Detektion der Pipettierflüssigkeit ermöglichen.

Beispielhafte Ausführungsformen der Erfindung umfassen eine Pipettiereinheit gemäß Anspruch 1, ein Verfahren zum kapazitiven Detektieren von Pipettierflüssigkeit gemäß Anspruch 14 und ein Computerprogramm gemäß Anspruch 15. Weitere Ausführungsformen der Erfindung finden sich in den abhängigen Ansprüchen.

Beispielhafte Ausführungsformen der Erfindung beinhalten eine Pipettiereinheit mit kapazitiver Flüssigkeitsdetektion, aufweisend ein Druckrohr; eine Abschirmung, die um das Druckrohr herum angeordnet ist; eine Kopplung zum temporären Befestigen einer Pipettierspitze an der Pipettiereinheit, wobei bei angeschlossener Pipettierspitze eine elektrische Verbindung zwischen dem Druckrohr und der Pipettierspitze besteht; und eine elektrische Schaltung, die mit dem Druckrohr und der Abschirmung gekoppelt ist, wobei die elektrische Schaltung eingerichtet ist, ein zeitlich veränderliches elektrisches Signal an das Druckrohr anzulegen, über welches bei angeschlossener Pipettierspitze eine kapazitive Detektion eines Kontakts zwischen Pipettierspitze und Pipettierflüssigkeit möglich ist, und wobei die elektrische Schaltung eingerichtet ist, die Abschirmung auf Masse zu legen.

Beispielhafte Ausführungsformen der Erfindung ermöglichen eine effektive und zuverlässige Detektion eines Kontakts zwischen Pipettierspitze und Pipettierflüssigkeit in der Pipettiereinheit. Durch das Anlegen eines zeitlich veränderlichen elektrischen Signals an das Druckrohr und durch die elektrische Verbindung zwischen dem Druckrohr und der Pipettierspitze kann eine sprunghafte Änderung der Kapazität zwischen Pipettierspitze und zu pipettierender Flüssigkeit, wie sie bei Berührung der Pipettierspitze mit der Pipettierflüssigkeit vorliegt, effektiv erkannt werden. Weiterhin kann dadurch, dass die um das Druckrohr herum angeordnete Abschirmung auf Masse gelegt ist, erreicht werden, dass das zeitlich veränderliche elektrische Signal weitgehend frei von Störeinflüssen zur Verfügung steht. Insbesondere können das Druckrohr und die Abschirmung das zeitlich veränderliche elektrische Signal nach dem Prinzip eines Koaxialkabels führen, wodurch eine starke Entkopplung gegenüber Störeinflüssen, wie beispielsweise elektromagnetischen Störungen aus der Umgebung und/oder parasitären Kapazitäten, erreicht werden kann. Dadurch, dass die elektrische Schaltung sowohl das zeitlich veränderliche elektrische Signal an das Druckrohr anlegt als auch den Masse-Anschluss für die Abschirmung bereitstellt, können eine besonders gut definierte Signalübertragungsumgebung für das zeitlich veränderliche elektrische Signal und eine besonders gute Abschirmung des zeitlich veränderlichen elektrischen Signals erreicht werden. Die kapazitive Detektion des Kontakts zwischen Pipettierspitze und Pipettierflüssigkeit ist so besonders zuverlässig möglich.

In der Pipettiereinheit erfolgt die kapazitive Flüssigkeitsdetektion durch eine kapazitive Detektion des Kontakts zwischen Pipettierspitze und Pipettierflüssigkeit. Bei einer vertikalen Bewegung der Pipettierspitze, wie sie beim Aspirieren bzw. Dispensieren von Pipettierflüssigkeit gebräuchlich ist, wird so der Füllstand in einem Behältnis detektiert, aus dem Pipettierflüssigkeit aspiriert werden soll oder in das Pipettierflüssigkeit dispensiert werden soll. Es kann eine wohldefinierte Eintauchtiefe der Pipettierspitze in die Pipettierflüssigkeit erreicht werden, was wiederum zu einer hohen Genauigkeit des aspirierten bzw. dispensierten Flüssigkeitsvolumens führen kann und/oder was die Kontamination der Pipettierspitze mit der Flüssigkeit, in die die Pipettierspitze eintaucht, minimiert bzw. auf ein geringes Maß reduzieren kann. Das Behältnis mit Pipettierflüssigkeit kann jegliches geeignetes Behältnis für Pipettierflüssigkeit sein, mit dem die Pipettiereinheit und die Pipettierspitze arbeiten können. Insbesondere bieten sich geerdete und/oder nicht elektrisch leitende Behältnisse an. In dem Bereich der Laborautomation kommt häufig sogenannte Labware zum Einsatz, bei der in trägerförmigen bzw. tablettförmigen Strukturen eine Vielzahl von Einbuchtungen, sogenannte Wells, zur Aufnahme von Pipettierflüssigkeit vorgesehen sind.

Die Pipettiereinheit hat eine Kopplung zum temporären Befestigen einer Pipettierspitze an der Pipettiereinheit. Die Pipettierspitze kann eine Einweg-Pipettierspitze sein. Dabei kann die Pipettierspitze tatsächlich nur für einen einzigen Aspirations- und Dispensionsvorgang benutzt werden. Es ist aber auch möglich, dass die Pipettierspitze für eine Mehrzahl von Aspirations- und Dispensionsvorgängen verwendet wird, bevor sie entsorgt wird. Die Kopplung kann so ausgeführt sein, dass bei angeschlossener Pipettierspitze eine im Wesentlichen gasdichte Verbindung zwischen Druckrohr und Pipettierspitze entsteht. Somit kann in dem Druckrohr und der Pipettierspitze ein im Wesentlichen abgeschlossenes Druckluftvolumen, mit Ausnahme der Pipettierspitzenöffnung, gebildet werden. Bei Pipettiersystemen, die das Aspirieren bzw. Dispensieren über Druckluft in dem Druckrohr steuern, ermöglicht die im Wesentlichen gasdichte Verbindung zwischen Druckrohr und Pipettierspitze eine hochgenaue Steuerung des zu aspirierenden bzw. zu dispensierenden Flüssigkeitsvolumens.

An die Pipettiereinheit kann ein Elektromotor, insbesondere ein elektrischer Linearmotor, angeschlossen sein. Der elektrische Linearmotor kann einen beweglichen Kolben aufweisen, durch den Druckänderungen in dem Druckrohr und der angeschlossenen Pipettierspitze zum Aspirieren bzw. Dispensieren der Pipettierflüssigkeit erreicht werden können. Der Elektromotor kann austauschbar an das Druckrohr angeschlossen sein oder integral mit dem Druckrohr und somit mit der Pipettiereinheit ausgebildet sein. Die Steuerung des Elektromotors kann mit der elektrischen Schaltung der Pipettiereinheit gekoppelt sein, so dass die Steuerung des Elektromotors den Aspirationsvorgang bzw. Dispensionsvorgang in Abhängigkeit der kapazitiven Detektion des Kontakts zwischen Pipettierspitze und Pipettierflüssigkeit durchführen kann.

Die elektrische Schaltung ist eingerichtet, ein zeitlich veränderliches elektrisches Signal an das Druckrohr anzulegen und die Abschirmung auf Masse zu legen. Sowohl das Druckrohr als auch die Abschirmung sind elektrisch leitfähig. Auf diese Weise können das zeitlich veränderliche elektrische Signal und das Masse-Potential entlang des Druckrohrs bzw. entlang der Abschirmung anliegen. Das Druckrohr und die Abschirmung sind zumindest teilweise aus elektrisch leitfähigem Material. Es ist möglich, dass das Druckrohr und/oder die Abschirmung vollständig oder im Wesentlichen vollständig aus elektrisch leitfähigem Material bestehen.

Bei angeschlossener Pipettierspitze besteht eine elektrische Verbindung zwischen dem Druckrohr und der Pipettierspitze. In anderen Worten, die Kopplung zwischen der Pipettierspitze und der Pipettiereinheit ist so ausgebildet, dass bei angeschlossener Pipettierspitze eine elektrische Verbindung zwischen dem Druckrohr und der Pipettierspitze besteht. Dazu kann die Kopplung zumindest teilweise leitfähig sein, so dass die elektrische Verbindung über ein oder mehrere Bauteile der Kopplung besteht. Es ist auch möglich, dass die Kopplung so ausgebildet ist, dass zumindest an einer Stelle ein direkter Kontakt zwischen Pipettierspitze und Druckrohr besteht, so dass über diesen direkten Kontakt eine elektrische Verbindung besteht.

Die Kopplung ist zum temporären Befestigen einer Pipettierspitze an der Pipettiereinheit ausgebildet. Die Pipettierspitze ist insbesondere eine elektrisch leitfähige Pipettierspitze. Somit kann das zeitlich veränderliche elektrische Signal über das Druckrohr und die elektrische Verbindung zwischen dem Druckrohr und der Pipettierspitze an der Pipettierspitze anliegen, insbesondere entlang der Pipettierspitze bis hin zur Pipettierspitzenöffnung anliegen. Der Kontakt zwischen der Pipettierspitze und der Pipettierflüssigkeit kann in diesem Fall einen unmittelbaren, zuverlässig zu detektierenden Einfluss auf das zeitlich veränderliche elektrische Signal haben.

Die elektrische Schaltung ist eingerichtet, das zeitlich veränderliche elektrische Signal an das Druckrohr anzulegen und die Abschirmung auf Masse zu legen. Insbesondere kann die elektrische Schaltung eingerichtet sein, das zeitlich veränderliche elektrische Signal zu erzeugen und an das Druckrohr anzulegen. Weiterhin kann die elektrische Schaltung eingerichtet sein, bei Anlegen des zeitlich veränderlichen elektrischen Signals an das Druckrohr, d.h. während oder nach dem Anlegen des zeitlich veränderlichen elektrischen Signals an das Druckrohr, die kapazitive Detektion des Kontakts zwischen Pipettierspitze und Pipettierflüssigkeit durchzuführen. Dazu kann die elektrische Schaltung eingerichtet sein, das elektrische Verhalten von Druckrohr, Pipettierspitze und Kopplung bei Anlegen des zeitlich veränderlichen elektrischen Signals zu detektieren und daraus das Vorliegen eines Kontakts bzw. keines Kontakts zwischen Pipettierspitze und Pipettierflüssigkeit abzuleiten. Durch die sprunghafte Änderung der Kapazität zwischen Pipettierspitze und Umgebung, insbesondere zwischen Pipettierspitze und mit Pipettierflüssigkeit gefülltem Behältnis, bei Kontakt der Pipettierspitze und der Pipettierflüssigkeit ändert sich auch das elektrische Verhalten in Antwort auf das zeitlich veränderliche elektrische Signal sprunghaft. Durch Erfassen und Analysieren der Reaktion des mit dem zeitlich veränderlichen elektrischen Signal angeregten Systems kann die elektrische Schaltung den Kontakt zwischen Pipettierspitze und Pipettierflüssigkeit detektieren. Die elektrische Schaltung kann als elektrische Schaltung zur Signalerzeugung und -anlegung einerseits sowie zum Signalempfang und - verarbeitung andererseits ausgebildet sein.

Die elektrische Schaltung ist eingerichtet, die Abschirmung auf Masse zu legen. Anstelle des Begriffs Masse können auch andere Begriffe, wie z.B. Erdung oder Ground, verwendet werden. Der Begriff Masse bezieht sich auf ein festgelegtes Potential in dem Pipettiersystem. Die elektrische Schaltung kann einen internen Masse-Anschluss haben, der mit der Abschirmung gekoppelt ist. Es ist auch möglich, dass die elektrische Schaltung mit einem externen Masse-Anschluss, wie z.B. mit einem Gehäuse des Pipettiersystems, verbunden ist und eine Kopplung zwischen diesem externen Masse-Anschluss und der Abschirmung bereitstellt.

Gemäß einer weiteren Ausführungsform ist das zeitlich veränderliche elektrische Signal ein periodisches Signal. Insbesondere kann das zeitlich veränderliche elektrische Signal ein sinusförmiges zeitlich veränderliches elektrisches Signal sein. Ein periodisches Signal ist besonders gut geeignet, das System aus Druckrohr, Kopplung und Pipettierspitze zu einer elektrischen Schwingung anzuregen und aus dem Verhalten des resultierenden Schwingkreises den Kontakt zwischen Pipettierspitze und Pipettierflüssigkeit zu bestimmen. Der Begriff periodisches Signal umfasst auch ein abschnittsweise periodisches Signal, beispielsweise ein zeitlich veränderliches elektrisches Signal, bei dem sich Abschnitte periodischer Signalverläufe mit Signalpausen abwechseln. Ein zeitlich veränderliches elektrisches Signal mit aneinander gereihten Signalabschnitten von jeweils periodischen Signalverläufen unterschiedlicher Frequenzen fällt auch unter den Begriff periodisches Signal.

Gemäß einer weiteren Ausführungsform hat das periodische Signal eine Frequenz von zwischen 450 kHz und 700 kHz, insbesondere eine Frequenz zwischen 500 kHz und 650 kHz.

Gemäß einer weiteren Ausführungsform ist die elektrische Schaltung eingerichtet, bei Anlegen des zeitlich veränderlichen elektrischen Signals eine Resonanzfrequenz des angeregten Systems zu bestimmen. Der Begriff "bei Anlegen des zeitlich veränderlichen elektrischen Signals" umfasst dabei das Bestimmen der Resonanzfrequenz während des Anlegens des zeitlich veränderlichen elektrischen Signals oder nach Anlegen des zeitlich veränderlichen elektrischen Signals. Im ersten Fall kann das Verhalten des angeregten Systems während einer erzwungenen Schwingung beobachtet werden, wobei die Resonanzfrequenz darüber bestimmt werden kann, wie gut das angeregte System mitschwingt. Im zweiten Fall kann das System mit einem zeitlich veränderlichen elektrischen Signal angeregt werden, welches beispielsweise eine Frequenz in der Nähe einer erwarteten Resonanzfrequenz haben kann, wobei die Resonanzfrequenz über eine freie Schwingung des Systems nach der Anregung bestimmt werden kann. Das Bestimmen der Resonanzfrequenz kann das Bestimmen eines Wertes der Resonanzfrequenz umfassen. Es ist auch möglich, dass kein konkreter Wert für die Resonanzfrequenz bestimmt wird, sondern bestimmt wird, in welchem Wertebereich die Resonanzfrequenz liegt. Beispielsweise kann bestimmt werden, ob die Resonanzfrequenz unterhalb oder oberhalb einer vorbestimmten Schwelle liegt. Eine solche binäre Bestimmung des Wertebereichs der Resonanzfrequenz erlaubt eine vergleichsweise wenig komplexe Auswertung, kann aber für die binäre Entscheidung, ob Kontakt zwischen der Pipettierspitze vorliegt oder nicht, ausreichend sein. Das angeregte System umfasst das Druckrohr, die Kopplung, die Pipettierspitze sowie, bei Kontakt mit der Pipettierflüssigkeit, die Pipettierflüssigkeit und gegebenenfalls das Behältnis der Pipettierflüssigkeit. Die Kapazitäten und Induktivitäten, insbesondere die parasitären Kapazitäten und Induktivitäten, der Komponenten des angeregten Systems bilden einen Schwingkreis, dessen Resonanzfrequenz sich bei Kontakt zwischen Pipettierspitze und Pipettierflüssigkeit ändert. Die Resonanzfrequenz des angeregten Systems kann somit für die Detektion des Kontakts zwischen Pipettierspitze und Pipettierflüssigkeit herangezogen werden. Durch das Anlegen von verschiedenen zeitlich veränderlichen elektrischen Signalen, insbesondere von zeitlich veränderlichen elektrischen Signalen mit unterschiedlichen Frequenzen, kann eine besonders zuverlässige Bestimmung der Resonanzfrequenz des angeregten Systems erreicht werden.

Gemäß einer weiteren Ausführungsform ist die elektrische Schaltung eingerichtet, das zeitlich veränderliche elektrische Signal wiederholt bzw. kontinuierlich an das Druckrohr anzulegen und auf Basis einer Änderung der Resonanzfrequenz des angeregten Systems den Kontakt zwischen Pipettierspitze und Pipettierflüssigkeit zu detektieren. Durch die differentielle Betrachtung der Resonanzfrequenz des angeregten System zu verschiedenen Zeitpunkten kann sich der Kontakt zwischen Pipettierspitze und Pipettierflüssigkeit besonders bequem detektieren lassen. Insbesondere kann auf das potentiell komplexe Festlegen einer Schwelle für die Resonanzfrequenz und das Vergleichen einer bestimmten Resonanzfrequenz mit der Schwelle verzichtet werden.

Gemäß einer alternativen Ausführungsform, die nicht unter den Wortlaut der Ansprüche fällt, wird aber als das Verständnis der Erfindung erleichternd angesehen, ist die elektrische Schaltung eingerichtet, ein zweites zeitlich veränderliches elektrisches Signal an die Abschirmung anzulegen. In anderen Worten, anstatt die Abschirmung auf Masse zu legen, kann die elektrische Schaltung eingerichtet sein, zusätzlich zu dem Anlegen des zeitlich veränderlichen elektrischen Signals an das Druckrohr ein zweites zeitlich veränderliches elektrisches Signal an die Abschirmung anzulegen. Mittels des zweiten zeitlich veränderlichen elektrischen Signals kann eine sehr geringe Kapazität zwischen Druckrohr und Abschirmung erreicht werden und ein sehr ungestörtes Anlegen des zeitlich veränderlichen elektrischen Signals an das Druckrohr erreicht werden. Das zeitlich veränderliche elektrische Signal, welches an das Druckrohr angelegt wird, wird im Zusammenhang der alternativen Ausführungsform auch als erstes zeitlich veränderliches elektrisches Signal bezeichnet.

Gemäß einer weiteren Ausführungsform, die nicht unter den Wortlaut der Ansprüche fällt, wird aber als das Verständnis der Erfindung erleichternd angesehen, ist die elektrische Schaltung eingerichtet, das erste zeitlich veränderliche elektrische Signal und das zweite zeitlich veränderliche elektrische Signal synchronisiert an das Druckrohr bzw. die Abschirmung anzulegen. Dabei können das erste und das zweite veränderliche elektrische Signal mit einem synchronisierten Beginn an das Druckrohr bzw. die Abschirmung angelegt werden. Alternativ / zusätzlich können das erste und das zweite zeitlich veränderliche elektrische Signal an vorbestimmten Zeitpunkten im Signalablauf miteinander synchronisiert werden, insbesondere können das erste und das zweite zeitlich veränderliche elektrische Signal periodisch miteinander synchronisiert werden. Durch das synchronisierte Anlegen von dem ersten und dem zweiten zeitlich veränderlichen elektrischen Signal kann eine besonders gute Abschirmung gegenüber Störeinflüssen erreicht werden.

Gemäß einer weiteren Ausführungsform, die nicht unter den Wortlaut der Ansprüche fällt, wird aber als das Verständnis der Erfindung erleichternd angesehen, entspricht das zweite zeitlich veränderliche elektrische Signal dem ersten zeitlich veränderlichen elektrischen Signal. Insbesondere können das erste zeitlich veränderliche elektrische Signal und das zweite zeitlich veränderliche elektrische Signal im Wesentlichen die gleiche Signalform haben. Die elektrische Schaltung kann dazu zwei gleiche Signale erzeugen oder ein Signal erzeugen und dieses eine Signal als erstes zeitlich veränderliches elektrisches Signal sowie als zweites zeitlich veränderliches elektrisches Signal an das Druckrohr bzw. die Abschirmung anlegen. Durch die Entsprechung des ersten zeitlich veränderlichen elektrischen Signal und des zweiten zeitlich veränderlichen elektrischen Signal kann eine besonders gute Abschirmung, insbesondere eine Abschirmung im Sinne eines Koaxialkabels, erreicht werden.

Gemäß einer weiteren Ausführungsform, die nicht unter den Wortlaut der Ansprüche fällt, wird aber als das Verständnis der Erfindung erleichternd angesehen, sind das erste zeitlich veränderliche elektrische Signal und das zweite zeitlich veränderliche elektrische Signal periodische Signale. Die Frequenz des ersten zeitlich veränderlichen elektrischen Signals und des zweiten zeitlich veränderlichen elektrischen Signals kann zwischen 450 kHz und 700 kHz, insbesondere zwischen 500 kHz und 650 kHz, betragen.

Die folgenden Merkmale und Modifikationen sind sowohl auf die zuerst beschriebene Ausführung, wonach die elektrische Schaltung eingerichtet ist, die Abschirmung auf Masse zu legen, als auch auf die alternative Ausführung, die nicht unter den Wortlaut der Ansprüche fällt, wird aber als das Verständnis der Erfindung erleichternd angesehen, wonach die elektrische Schaltung eingerichtet ist, ein zweites zeitlich veränderliches Signal an die Abschirmung anzulegen, anwendbar.

Gemäß einer weiteren Ausführungsform ist die elektrische Schaltung eingerichtet, einen Spannungsverlauf als zeitlich veränderliches elektrisches Signal an das Druckrohr anzulegen. Der Spannungsverlauf kann jede beliebige geeignete Form haben. Beispielsweise kann der Spannungsverlauf sinusförmig sein oder aus zeitlich beabstandeten Spannungspulsen bestehen. Die Spannungspulse können insbesondere Spannungspulse im Wesentlichen konstanter Spannung sein. Es wird betont, dass die elektrische Schaltung auch eingerichtet sein kann, einen Stromverlauf als zeitlich veränderliches elektrisches Signal an das Druckrohr anzulegen.

Gemäß einer weiteren Ausführungsform ist die elektrische Schaltung eingerichtet, einen zeitlichen Verlauf einer elektrischen Größe an dem Druckrohr zu empfangen und aus dem zeitlichen Verlauf der elektrischen Größe an dem Druckrohr einen Kontakt zwischen Pipettierspitze und Pipettierflüssigkeit zu detektieren. Die elektrische Größe an dem Druckrohr ist die Reaktion auf das zeitlich veränderliche elektrische Signal. Aufgrund der sprunghaften Änderung der Kapazität zwischen Pipettierspitze und Pipettierflüssigkeit bei Kontakt von Pipettierspitze und Pipettierflüssigkeit ist die Reaktion auf das zeitlich veränderliche elektrische Signal unterschiedlich, je nachdem ob Kontakt vorliegt oder nicht. Die elektrische Größe kann an jedem beliebigen geeigneten Ort des Druckrohrs oder einer mit dem Druckrohr leitend verbundenen Komponente abgegriffen werden. Es ist auch möglich, die elektrische Größe an dem Signalausgang der elektrischen Schaltung für das zeitlich veränderliche elektrische Signal zu bestimmen. Die elektrische Größe an dem Druckrohr kann beispielsweise der Strom sein, der in Reaktion auf das Anlegen eines Spannungsverlaufs entsteht. Die elektrische Größe kann beispielsweise auch die Spannung an dem Druckrohr bzw. einer mit dem Druckrohr leitend verbundenen Komponente sein, die in Reaktion auf das Anlegen eines Stromverlaufs entsteht. Je nach Ausbildung des Druckrohrs und der Pipettierspitze, nach Ausgestaltung des zeitlich veränderlichen elektrischen Signals, und nach den Positionen für das Anlegen des zeitlich veränderlichen elektrischen Signals und für das Abgreifen der genannten elektrischen Größe können Entscheidungskriterien aufgestellt werden, ob die abgegriffene elektrische Größe einen Kontakt zwischen Pipettierspitze und Pipettierflüssigkeit anzeigt oder nicht.

Gemäß einer weiteren Ausführungsform ist die elektrische Schaltung eingerichtet, den zeitlichen Verlauf der elektrischen Größe bezüglich Amplitude und/oder Steigung und/oder Integral und/oder Frequenz und/oder Phase zu analysieren und darauf basierend einen Kontakt zwischen Pipettierspitze und Pipettierflüssigkeit zu detektieren. Eine Änderung von Amplitude und/oder Steigung und/oder Integral und/oder Frequenz und/oder Phase kann eine Änderung der Kapazität zwischen Pipettierspitze und Pipettierflüssigkeit anzeigen und somit als Auftreten oder Entfallen eines Kontakts zwischen Pipettierspitze und Pipettierflüssigkeit gedeutet werden. Für die Detektion können einfache Grenzwerte für Amplitude und/ oder Steigung und/oder Integral und/oder Frequenz und/oder Phase herangezogen werden. Es ist aber auch möglich, eine komplexere Signalverarbeitung auf den zeitlichen Verlauf der elektrischen Größe anzuwenden und daraus den Kontakt zu detektieren.

Gemäß einer weiteren Ausführungsform ist die elektrische Schaltung in Form eines integralen Schaltungsbauteils ausgeführt. Mit dem Begriff integrales Schaltungsbauteil ist nicht zwingend gemeint, dass die elektrische Schaltung in Form einer integrierten Schaltung (integrated circuit, IC) im engem Sinne vorliegt. Vielmehr ist der Begriff integrales Schaltungsbauteil so zu verstehen, dass die elektrische Schaltung als zusammenhängendes, einzelnes Bauelement bzw. als zusammenhängende, einzelne Baugruppe vorliegt und insbesondere in einer Art und Weise ausgeführt ist, die es erlaubt, die elektrische Schaltung als Ganzes an der Pipettiereinheit zu montieren bzw. von dieser zu entfernen. Die elektrische Schaltung kann als einzelnes Schaltungsbauteil ausgeführt sein, kann in besonderen Ausführungen auch als integrierte Schaltung im engeren Sinne vorliegen.

Die elektrische Schaltung kann somit leicht montiert, demontiert und ausgewechselt werden.

Gemäß einer weiteren Ausführungsform ist die elektrische Schaltung als Schaltung mit gedruckten Leiterbahnen ausgeführt. Im Fachjargon wird die Schaltung mit gedruckten Leiterbahnen auch als printed circuit bezeichnet. Auf diese Weise kann die elektrische Schaltung mit sehr geringer Größe, hoher Genauigkeit und hoher Zuverlässigkeit produziert werden.

Gemäß einer weiteren Ausführungsform ist die elektrische Schaltung als Flexprint, insbesondere als mehrlagiges Flexprint, ausgeführt. Der Begriff Flexprint bezeichnet eine Schaltung mit gedruckten Leiterbahnen, die nicht auf einer starren Platte aufgebracht ist, sondern mechanische Flexibilität aufweist. Beispielsweise können die gedruckten Leiterbahnen in einem flexiblen, Gummi-artigen Träger eingebracht sein. Der Begriff Flexprint kann ein flexible printed circuit bezeichnen. Vor allem im Bereich der Laborautomation bewegen sich die Komponenten von Pipettiersystemen extrem häufig und extrem schnell, sowohl im Bezug auf die Pipettierflüssigkeit als auch relativ zueinander, z.B. beim Anschließen und Abwerfen einer Pipettierspitze. Durch die Ausführung als Flexprint kann die elektrische Schaltung das veränderliche elektrische Signal effektiv bereitstellen und dabei ein hohes Maß an Flexibilität für die hoch kompakte Montage des Pipettiersystems ermöglichen. Das Flexprint kann besonders gut so angeordnet werden, dass es trotz einer hohen Integrationsdichte des Pipettiersystems die häufigen und schnellen Bewegungen der Komponenten nicht stört.

Gemäß einer weiteren Ausführungsform ist die elektrische Schaltung mit einer Schraube an der Pipettiereinheit fixiert. Weiterhin kann die elektrische Schaltung über die Schraube mit dem Druckrohr elektrisch gekoppelt sein. Somit kann sowohl die mechanische Fixierung der elektrischen Schaltung als auch die elektrische Kopplung an das Druckrohr über ein Bauteil erfolgen. Die Schraube kann die doppelte Funktion der mechanischen Fixierung der elektrischen Schaltung einerseits und der elektrischen Kopplung zwischen der elektrischen Schaltung und dem Druckrohr andererseits bereitstellen. Es ist möglich, eine für die mechanische Fixierung vorgesehene Schraube zusätzlich für die elektrische Kopplung zwischen elektrischer Schaltung und Druckrohr zu verwenden. Auf diese Weise kann eine separate elektrische Verbindung zwischen elektrischer Schaltung und Druckrohr, die möglicherweise aufgrund der hohen Integrationsdichte fehleranfällig ist, vermieden werden.

Gemäß einer weiteren Ausführungsform ist die elektrische Schaltung über die Schraube und ein Gewindeloch oder über die Schraube und eine Schraubenmutter mit dem Druckrohr gekoppelt. In anderen Worten, das zeitlich veränderliche elektrische Signal kann über die Schraube und ein Gewindeloch oder über die Schraube und eine Schraubenmutter an das Druckrohr angelegt sein. Dazu kann eine permanente elektrische Verbindung zwischen dem Gewindeloch und dem Druckrohr bzw. der Schraubenmutter und den Druckrohr vorhanden sein, was fertigungstechnisch mit geringerer Komplexität und hoher Zuverlässigkeit erreicht werden kann.

Gemäß einer weiteren Ausführungsform ist die elektrische Schaltung an einem Pipettierspitzen-fernen Endbereich des Druckrohrs mit dem Druckrohr verbunden. Auf diese Weise können das Druckrohr und die Abschirmung über eine große Länge als Baueinheit mit kleiner Querschnittsausdehnung bereitgestellt werden. Es kann eine große Integrationsdichte von Pipettiereinheiten in Pipettiersystemen mit einer Vielzahl von Pipettiereinheiten erreicht werden, wobei ausreichend Platz zum Ankoppeln bzw. Abkoppeln von Pipettierspitzen vorhanden ist.

Erfindungsgemäß ist die Abschirmung gegenüber dem Druckrohr beweglich gelagert. Erfindungsgemäß kann die Abschirmung zur Ausübung einer Abwurfkraft auf eine angeschlossene Pipettierspitze bewegbar sein. Auf diese Weise kann die Abschirmung die doppelte Funktion einer elektrischen Abschirmung für das zeitlich veränderliche elektrische Signal auf dem Druckrohr und einer für das Abkoppeln einer Pipettierspitze ausgebildeten mechanischen Komponente übernehmen. Die Abschirmung kann dabei koaxial mit dem Druckrohr angeordnet sein, wobei entsprechende Lager eine lineare Bewegung der Abschirmung gegenüber dem Druckrohr ermöglichen.

Erfindungsgemäß weist die Pipettiereinheit weiterhin eine Abwurffeder auf, welche an einem Pipettierspitzen-fernen Endbereich der Abschirmung angeordnet ist. Erfindungsgemäß kann die elektrische Schaltung über die Abwurffeder mit der Abschirmung elektrisch gekoppelt sein. In anderen Worten, die elektrische Schaltung kann über die Abwurffeder die Abschirmung auf Masse legen. Auf diese Weise kann die Abwurffeder die doppelte Funktion des Ausübens einer Bewegungskraft auf die Abschirmung einerseits und der elektrischen Kopplung von elektrischer Schaltung und Abschirmung andererseits übernehmen.

Gemäß einer weiteren Ausführungsform ist die Abwurffeder koaxial um das Druckrohr herum angeordnet. Auf diese Weise kann die Abwurffeder einerseits eine umlaufende Kraft zur Bewegung der Abschirmung aufbringen. Andererseits kann die Abwurffeder einen effektiven Teil der Abschirmung des Druckrohrs bilden und so dazu beitragen, dass das zeitlich veränderliche elektrische Signal in hohem Maße ungestört für die Detektion des Kontakts zwischen Pipettierspitze und Pipettierflüssigkeit verwendet werden kann.

Gemäß einer weiteren Ausführungsform weist die Pipettiereinheit eine Mehrzahl von Abwurffedern, insbesondere zwei, drei oder vier Abwurffedern, auf, welche an einem Pipettierspitzen-fernen Endbereich der Abschirmung angeordnet sind. In diesem Fall kann die elektrische Schaltung über eine oder mehrere oder alle der Mehrzahl von Abwurffedern mit der Abschirmung elektrisch gekoppelt sein. Die Mehrzahl von Abwurffedern können um das Druckrohr herum angeordnet sein, insbesondere in regelmäßigen radialen Abständen voneinander um das Druckrohr herum angeordnet sein. Anstelle einer umlaufenden Kraft zur Bewegung der Abschirmung bringt die Mehrzahl von Abwurffedern die Kraft zur Bewegung der Abschirmung dann in voneinander beabstandeten Bereichen auf.

Gemäß einer weiteren Ausführungsform ist die Abwurffeder bzw. sind die Abwurffedern aus Stahl, insbesondere aus rostfreiem Stahl, weiter insbesondere aus Chromstahl, gefertigt. Mit diesen Materialien können die zwei Funktionen der Aufbringung der mechanischen Bewegungskraft und der elektrischen Verbindung besonders gut erreicht werden.

Gemäß einer weiteren Ausführungsform weist die Pipettiereinheit eine Isolation auf, die an einem Pipettierspitzen-zugewandten Endbereich der Abschirmung angeordnet ist. Insbesondere kann die Isolation zwischen der Abschirmung und der Kopplung und/oder zwischen der Abschirmung und einer angeschlossenen Pipettierspitze angeordnet sei. Somit können das zeitlich veränderliche elektrische Signal und das Masse-Potential an dem Pipettierspitzen-zugewandten Endbereich der Abschirmung effektiv voneinander getrennt sein.

Gemäß einer weiteren Ausführungsform ist die Abschirmung koaxial zu dem Druckrohr angeordnet. Auf diese Weise ist eine besonders kompakte Bauform sowie eine besonders effektive Abschirmung des zeitlich veränderlichen elektrischen Signals gegenüber den Störeinflüssen aus der Umwelt möglich. Die Abschirmung kann eine im Wesentlichen gleiche Länge wie das Druckrohr haben.

Es ist auch möglich, dass das Druckrohr an dem Pipettierspitzen-fernen Ende und/oder an den Pipettierspitzen-zugewandten Ende aus der Abschirmung hinausragt.

Gemäß einer weiteren Ausführungsform ist die Kopplung eine aktive Kopplung zum Fixieren bzw. Freigeben einer Pipettierspitze. In anderen Worten, die Kopplung kann eine aktive Kopplung zum Ankoppeln bzw. Abkoppeln einer Pipettierspitze sein. Die aktive Kopplung kann insbesondere eine Hubmagnet-getriebene Kopplung sein. Die Kopplung kann Steuerflächen zum Fixieren / Freigeben von Pipettierspitzen haben. Die Steuerflächen können eine Kraft auf bewegliche Teile der Kopplung, wie beispielsweise bewegliche Kugeln oder einen beweglichen O-Ring, haben. Die Steuerflächen können von dem Hubmagnet bewegt werden, wenn es sich bei der Kopplung um eine Hubmagnet-getriebene Kopplung handelt. Durch die Steuerflächen kann die radiale Position der Kugeln oder des O-Rings verändert werden, so dass eine Pipettierspitze in Position gehalten werden kann. Durch Bewegung der Kugeln oder des O-Rings radial nach innen kann eine mechanische Festlegung der Pipettierspitze aufgehoben werden, so dass die Pipettierspitze abgekoppelt werden kann. Das Abkoppeln kann dann über einen separaten Mechanismus, beispielsweise über das Zusammenspiel der oben beschriebenen Abwurffeder und der Abschirmung, erfolgen.

Gemäß einer weiteren Ausführungsform weist die Pipettiereinheit weiterhin einen Linearmotor auf, der mit dem Druckrohr verbunden ist, wobei ein Kolben beweglich in dem Linearmotor angeordnet ist und wobei durch eine Bewegung des Kolbens Druckänderungen in den Druckrohr zum Aspirieren bzw. Dispensieren von Pipettierflüssigkeit möglich sind.

Der Linearmotor kann insbesondere ein linearer Elektromotor sein. Insbesondere kann der Kolben mit Permanentmagneten ausgerüstet sein, und es können eine Mehrzahl von Elektromagneten um die Bewegungsbahn des Kolbens herum angeordnet sein. Durch eine geeignete Ansteuerung der Elektromagnete kann der Kolben in dem Linearmotor bewegt werden und gewünschte Druckänderungen in dem Druckrohr bewirken. Der Linearmotor kann fest installiert mit dem Druckrohr verbunden sein. Es ist auch möglich, dass der Linearmotor als eine integrierte Baugruppe ausgeführt ist und als Ganzes ausgewechselt werden kann.

Beispielhafte Ausführungsformen der Erfindung umfassen weiterhin eine Kombination einer Pipettiereinheit und einer Pipettierspitze, wobei die Kombination eine Pipettiereinheit gemäß einer der oben beschriebenen Ausführungsformen aufweist und eine leitfähige Pipettierspitze aufweist, die an der Pipettiereinheit befestigbar ist. Die zusätzlichen Merkmale, Modifikationen und technischen Effekte, die oben für die Pipettiereinheit beschrieben worden sind, gelten für die Kombinationen der Pipettiereinheit mit einer Pipettierspitze analog. Die Pipettiereinheit und die leitfähige Pipettierspitze können als Kit vorliegen. Es ist auch möglich, dass die Pipettiereinheit als Teil eines Pipettiersystems eingebaut ist und dass eine leitfähige Pipettierspitze oder ein Vorrat an leitfähigen Pipettierspitzen separat bereitgestellt wird. Beispielhafte Ausführungsformen der Erfindung umfassen auch die Kombination der Pipettiereinheit und der Pipettierspitze, wobei die leitfähige Pipettierspitze an der Pipettiereinheit befestigt ist.

Gemäß einer weiteren Ausführungsform ist die Pipettierspitze eine Einmal-Pipettierspitze. Dabei bezeichnet der Begriff Einmal-Pipettierspitze eine Pipettierspitze, die im Vergleich zu der Pipettiereinheit eine viel geringere Lebensdauer hat. Insbesondere kann der Begriff Einmal-Pipettierspitze eine Pipettierspitze bezeichnen, die in der Regel nur für einen Aspirations- und Dispensionsvorgang verwendet wird. Es ist aber auch möglich, dass die Einmal-Pipettierspitze für eine geringe Mehrzahl von Aspirations- und Dispensionsvorgängen verwendet wird, beispielsweise für höchstens zehn, insbesondere höchstens fünf Aspirations- und Dispensionsvorgänge verwendet wird. Auf diese Weise können in der Laborautomation Verunreinigungen der Proben durch Kontamination der Pipettierspitze vermieden oder zumindest gering gehalten werden.

Gemäß einer weiteren Ausführungsform ist die Pipettierspitze aus leitfähigen Polymermaterial hergestellt. Die Herstellung aus leitfähigem Polymermaterial ermöglicht das Anlegen des zeitlich veränderlichen elektrischen Signals bis an die Pipettierspitzenöffnung, wobei die Pipettierspitze zu vertretbaren Kosten hergestellt werden kann. Insbesondere ermöglicht eine solche Herstellung die Verwendung als Einmal-Pipettierspitze auf vertretbare Weise.

Beispielhafte Ausführungsformen der Erfindung umfassen weiterhin ein Pipettiersystem, aufweisend mindestens eine Pipettiereinheit gemäß einer der oben beschriebenen Ausführungsformen. Insbesondere kann das Pipettiersystem eine Mehrzahl von Pipettiereinheiten aufweisen, von denen jede gemäß einer der oben beschriebenen Ausführungsformen ausgebildet ist. Die zusätzlichen Merkmale, Modifikationen und technischen Effekte, die oben für die Pipettiereinheit beschrieben worden sind, gelten für das Pipettiersystem analog. Das Pipettiersystem kann insbesondere 96 Pipettiereinheiten aufweisen, von denen jede gemäß einer der oben beschriebenen Ausführungsformen ausgebildet ist. Auf diese Weise kann das Pipettiersystem schnell und effektiv mit in der Laborautomation gebräuchlichen Behältern, die in einem 8x12-Raster ausgebildet sind, zusammenarbeiten. Es sind auch andere Anzahlen von Pipettiereinheiten möglich, insbesondere andere Anzahlen, die gut für bestehende Rastermaße geeignet sind.

Beispielhafte Ausführungsformen der Erfindung umfassen weiterhin ein Verfahren zum kapazitiven Detektieren von Pipettierflüssigkeit durch eine Pipettiereinheit, aufweisend Anlegen eines zeitlich veränderlichen elektrischen Signals an ein Druckrohr der Pipettiereinheit, von dem aus das zeitlich veränderliche elektrische Signal über eine Kopplung an einer temporär befestigten Pipettierspitze anliegt; Bereitstellen eines Masse-Anschlusses für eine Abschirmung der Pipettiereinheit, die um das Druckrohr herum angeordnet ist, wobei das zeitlich veränderliche elektrische Signal und der Masse-Anschluss von einer gemeinsamen elektrischen Schaltung bereitgestellt werden; und Detektieren eines Kontakts zwischen der Pipettierspitze und der Pipettierflüssigkeit mittels des zeitlich veränderlichen elektrischen Signals. Die zusätzlichen Merkmale, Modifikationen und technischen Effekte, die oben mit Bezug auf die Pipettiereinheit beschrieben worden sind, gelten für das Verfahren zum kapazitiven Detektieren von Pipettierflüssigkeit durch eine Pipettiereinheit analog.

Gemäß einer weiteren Ausführungsform ist das zeitlich veränderliche elektrische Signal ein periodisches Signal.

Gemäß einer weiteren Ausführungsform umfasst das Verfahren weiterhin: Bestimmen einer Resonanzfrequenz des angeregten Systems bei Anlegen des zeitlich veränderlichen elektrischen Signals.

Gemäß einer weiteren Ausführungsform umfasst das Verfahren weiterhin: wiederholtes bzw. kontinuierliches Anlegen des zeitlich veränderlichen elektrischen Signals an das Druckrohr und Detektieren des Kontakts zwischen Pipettierspitze und Pipettierflüssigkeit auf Basis einer Änderung der Resonanzfrequenz des angeregten Systems.

Gemäß einer weiteren Ausführungsform umfasst das Anlegen des zeitlich veränderlichen elektrischen Signals das Anlegen eines Spannungsverlaufs an das Druckrohr.

Gemäß einer weiteren Ausführungsform weist das Verfahren weiterhin auf: Empfangen bzw. Messen bzw. Aufnehmen eines zeitlichen Verlaufs einer elektrischen Größe an dem Druckrohr. Der Schritt des Detektierens des Kontakts zwischen der Pipettierspitze und der Pippetierflüssigkeit kann mittels des zeitlich veränderlichen elektrischen Signals und des zeitlichen Verlaufs der elektrischen Größe an dem Druckrohr erfolgen.

Gemäß einer weiteren Ausführungsform weist das Verfahren weiterhin auf: Analysieren des zeitlichen Verlaufs der elektrischen Größe bezüglich Amplitude und/ oder Steigung und/oder Integral und/oder Frequenz und/oder Phase und darauf basierend Detektieren des Kontakts zwischen Pipettierspitze und Pipettierflüssigkeit.

Gemäß einer weiteren Ausführungsform weist das Anlegen des zeitlich veränderlichen elektrischen Signals ein Anlegen des zeitlich veränderlichen elektrischen Signals an eine Schraube auf, mit der eine elektrische Schaltung, von der das zeitlich veränderliche elektrische Signal stammt, an der Pipettiereinheit fixiert ist und die mit dem Druckrohr elektrisch gekoppelt ist. Insbesondere kann die Schraube über ein Gewindeloch oder eine Schraubenmutter mit dem Druckrohr elektrisch gekoppelt sein.

Erfindungsgemäß weist das Bereitstellen eines Masse-Anschlusses für die Abschirmung ein Bereitstellen eines Masse-Anschlusses für eine Abwurffeder auf, die mit der Abschirmung elektrisch gekoppelt ist und durch die die Abschirmung gegenüber dem Druckrohr bewegt werden kann.

Beispielhafte Ausführungsformen der Erfindung umfassen weiterhin ein Computerprogramm bzw. ein Computerprogrammprodukt, welches Programmanweisungen enthält, die bei Ausführung auf einer Datenverarbeitungsanlage ein Verfahren gemäß einer der oben beschriebenen Ausführungsformen durchführen. Dabei können die einzelnen Schritte des Verfahrens durch die Programmanweisungen veranlasst werden und durch andere Komponenten aufgeführt werden oder in der Datenverarbeitungsanlage selbst ausgeführt werden.

Weitere beispielhafte Ausführungsformen der Erfindung werden unten mit Bezug auf die beiliegenden Figuren beschrieben.
Fig. 1 zeigt eine Pipettiereinheit gemäß einer beispielhaften Ausführungsform der Erfindung in einem Längsschnitt;
Fig. 2 zeigt die Pipettiereinheit der Fig. 1 in einer Seitenansicht;
Fig. 3 zeigt ein Pipettiersystem gemäß einer beispielhaften Ausführungsform der Erfindung in einem Längsschnitt;
Fig. 4 zeigt einen Elektromotor in einem Längsschnitt, wie er in einer Pipettiereinheit gemäß einer beispielhaften Ausführungsform der Erfindung verwendet werden kann.

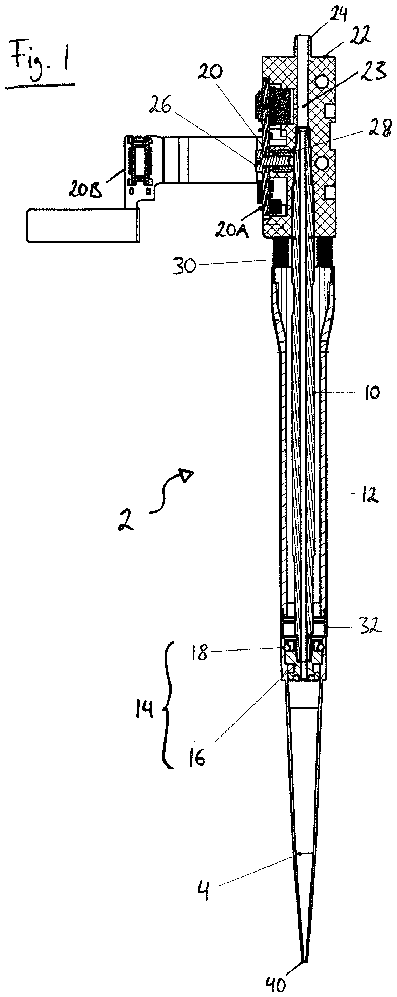

Fig. 1 zeigt eine Pipettiereinheit 2 gemäß einer beispielhaften Ausführungsform der Erfindung in einer Längsschnittdarstellung. An der Pipettiereinheit 2 ist eine Pipettierspitze 4 befestigt. Die Pipettierspitze 4 kann an die Pipettiereinheit 2 angekoppelt werden und von dieser abgekoppelt werden, wie unten im Detail beschrieben. Somit kann man auch sagen, dass Fig. 1 eine Kombination einer Pipettiereinheit 2 und einer Pipettierspitze 4 zeigt.

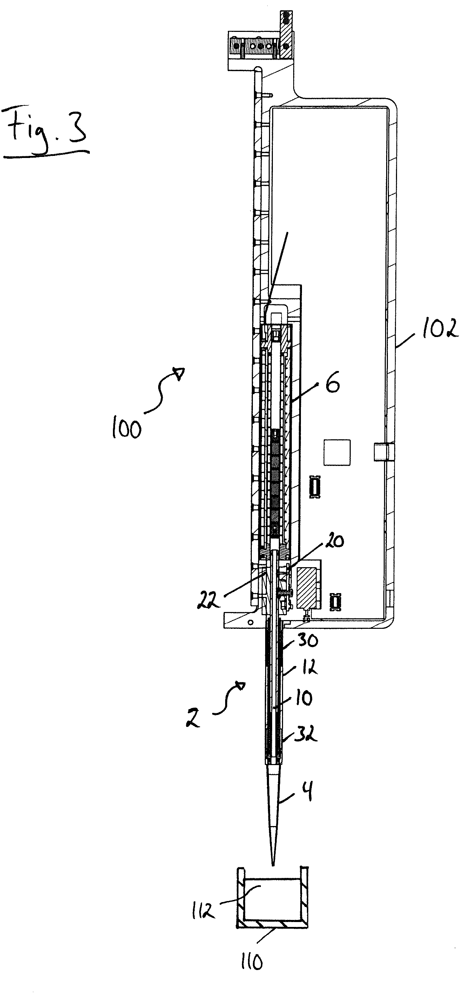

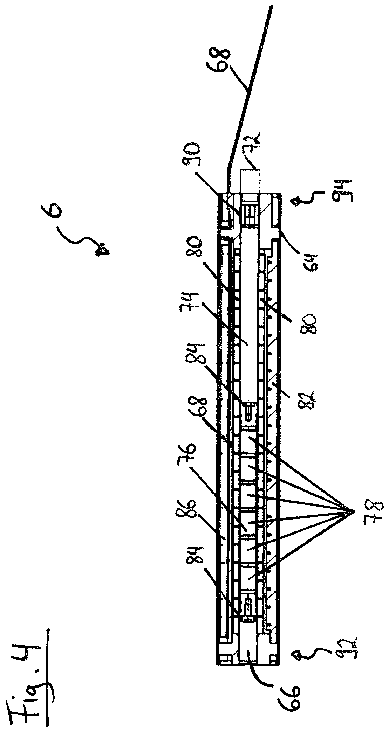

Die Pipettiereinheit 2 weist ein Druckrohr 10 auf. Das Druckrohr 10 ist starr mit einem Halter 22 verbunden. Insbesondere kann das Druckrohr 10 in eine entsprechende Aufnahme des Halters 22 eingefügt, insbesondere eingepresst, sein. Durch den Halter 22 erstreckt sich eine Druckleitung 23, welche in Fluidverbindung mit dem Druckrohr 10 steht. In der Ausrichtung von Fig. 1, welche der Betriebsposition der Pipettiereinheit 2 entspricht, erstreckt sich das Druckrohr 10 von dem Halter 22 nach unten. An dem Druckrohr-fernen Ende des Halters 22 weist der Halter 22 einen Motoranschluss 24 auf, an den ein Elektromotor zur Änderung des Drucks in der Druckleitung 23 und dem Druckrohr 10 anschließbar ist. Der Motoranschluss und der Elektromotor werden unten mit Bezug auf Fig. 3 und 4 beschrieben.

Die Pipettiereinheit 2 weist weiterhin eine Abschirmung 12 auf, die koaxial um das Druckrohr 10 herum angeordnet ist. Die Längserstreckung der Abschirmung 12 ist geringer als die Längserstreckung des Druckrohrs 10. Nach oben ragt das Druckrohr 10 aus der Abschirmung 12 heraus und erstreckt sich in den Halter 22, wie oben beschrieben. Nach unten ragt das Druckrohr 10 aus der Abschirmung 12 heraus und bildet eine Halterung für die Pipettierspitze 4, wie unten beschrieben. Auch wenn die Abschirmung 12 insgesamt deutlich kürzer ist als das Druckrohr 10, erstreckt sich die Abschirmung 12 über einen Großteil der Länge des Teils des Druckrohrs 10, das aus dem Halter 22 herausragt.

Die Abschirmung 12 ist in Längsrichtung gegenüber dem Druckrohr 10 beweglich. Zwischen der Abschirmung 12 und dem Halter 22 ist eine Abwurffeder 30 angeordnet. Die Abwurffeder 30 übt eine Kraft auf die Abschirmung 12 aus, welche die Abschirmung 12 relativ zu dem Druckrohr 10 und dem Halter 22 bewegen will und welche die Abschirmung 12 nach unten zum Abwerfen der Pipettierspitze 4 bewegen will. Somit übt die Abschirmung 12 in Folge der von der Feder 30 ausgeübten Kraft eine Abwurfkraft auf die Pipettierspitze 4 aus. Der Abwurfmechanismus wird unten im Detail beschrieben. Die Abwurffeder 30 ist koaxial um das Druckrohr 10 herum angeordnet. Die Abwurffeder 30 kann insbesondere zwischen einer unteren Stirnfläche des Halters 22 und einer oberen Stirnfläche der Abschirmung 12 angeordnet sein, um die Federkraft effektiv auf die Abschirmung 12 zu übertragen. Anstelle der einen, koaxial um das Druckrohr 10 herum angeordneten Abwurffeder 30 können auch eine Mehrzahl von Abwurffedern um das Druckrohr 10 herum angeordnet sein. Die einzelnen Abwurffedern dieser Mehrzahl von Abwurffedern sind in ihrem Querschnitt kleiner als die koaxial um das Druckrohr 10 herum angeordnete Abwurffeder 30. Beispielsweise können in der Längsschnittansicht von Fig. 1 rechts und links des Druckrohrs 10 jeweils eine Abwurffeder angeordnet sein.

Die Abschirmung 12 kann ein Spritzgussteil sein. Sie kann beispielsweise aus einer Chrom-beschichteten Nickel-Kupfer-Nickel-Anordnung bestehen, und die Außenflächen können zur Isolation lackiert sein. Die Abwurffeder 30 bzw. die Abwurffedern kann / können beispielsweise aus Chromstahl bestehen.

Die Pipettiereinheit 2 weist weiterhin eine Kopplung 14 auf. Die Kopplung 14 ermöglicht das temporäre Befestigen der Pipettierspitze 4 an der Pipettiereinheit 2. Insbesondere ermöglicht die Kopplung 14, dass die Pipettierspitze 4 so an der Pipettiereinheit 2 befestigt werden kann, dass die Pipettierspitze 4 gegenüber dem Druckrohr 10 unbeweglich ist. Die Kopplung 14 weist ein Positionierungselement 16 und eine Mehrzahl von Kugeln 18 auf, welche um das Druckrohr 10 herum in einem Käfig angeordnet sind. Der Käfig erlaubt eine radiale Bewegung der Kugeln 18 in vorbestimmten Grenzen und verhindert eine freie Bewegung der Kugeln 18. Das Positionierungselement 16 hat eine nach unten gerichtete Anlagefläche, mit der eine Stufe entlang der inneren Oberfläche der Pipettierspitze 4 in Eingriff ist, wenn die Pipettierspitze 4 an der Pipettiereinheit 2 befestigt ist. Durch das Zusammenwirken der Anlagefläche des Positionierungselements 16 und der Stufe an der inneren Oberfläche der Pipettierspitze 4 wird die Pipettierspitze 4 beim Aufstecken auf die Pipettiereinheit 2 in eine wohldefinierte Position in Längsrichtung, d. h. in eine wohldefinierte Position in Oben-Unten-Richtung, gebracht.

Die Kugeln 18 sind Teil eines Sperrmechanismus zum Fixieren der Pipettierspitze 4 an der Pipettiereinheit 2. Wenn die Pipettierspitze 4 in die korrekte Längsposition gebracht ist, wird über geeignete Steuerflächen eine radial nach außen gerichtete Kraft auf die Kugeln 18 aufgebracht, so dass sich die Kugeln 18 radial nach außen in entsprechende Ausnehmungen in der Pipettierspitze 4 bewegen. Die Steuerflächen bewirken weiterhin, dass die Kugeln 18 sich nicht radial nach innen zurückbewegen können. So ist die Pipettierspitze 4 an der Pipettiereinheit 2 gesichert, und die von der Abschirmung 12 mittels der Abwurffeder 30 aufgebrachte Abwurfkraft kann die Pipettierspitze 4 nicht abwerfen. Die Pipettierspitze 4 verbleibt fest an der Pipettiereinheit 2, ohne von außen in dieser Position gehalten werden zu müssen.

Wenn die Pipettierspitze 4 entfernt werden soll, werden die Steuerflächen so bewegt, dass sie die Kugeln 18 der Kopplung 14 insofern freigeben, dass sie sich radial nach innen bewegen können. Die durch die Abschirmung 12 aufgebrachte Abwurfkraft drückt die Pipettierspitze 4 nach unten und entkoppelt diese von dem Druckrohr 10.

Die Pipettierspitze 4 hat eine Pipettierspitzenöffnung 40. Wenn die Pipettierspitze 4 an der Pipettiereinheit 2 angeschlossen ist, entsteht in der Pipettierspitze 4, dem Druckrohr 10, der Druckleitung 23 und dem angeschlossenen Elektromotor ein Druckluftvolumen. Dieses Druckluftvolumen ist mit Ausnahme der Pipettierspitzenöffnung 40 abgeschlossen. Durch Änderungen des Drucks in dem Druckluftvolumen mittels des angeschlossenen Elektromotors kann Pipettierflüssigkeit durch die Pipettierspitzenöffnung 40 aspiriert bzw. dispensiert werden.

Das Druckrohr 10, die Abschirmung 12, das Positionierungselement 16 und die Pipettierspitze 4 sind elektrisch leitfähig. An dem Pipettierspitzen-zugewandten Ende der Abschirmung 12 ist eine Isolation 32 vorgesehen, welche bei angeschlossener Pipettierspitze 4 zwischen der Abschirmung 12 und der Pipettierspitze 4 positioniert ist. Somit gibt es keine elektrische Verbindung zwischen der Abschirmung 12 auf der einen Seite und dem Druckrohr 10, der Kopplung 14 und der Pipettierspitze 4 auf der anderen Seite. Das Druckrohr 10 ist mit der angeschlossenen Pipettierspitze 4 über die Kopplung 14 elektrisch verbunden. In der beispielhaften Ausführungsform der Fig. 1 sind sowohl das Positionierungselement 16 als auch die Kugeln 18 elektrisch leitfähig.

Die Pipettiereinheit 2 weist weiterhin eine elektrische Schaltung 20 auf. Die elektrische Schaltung 20 hat einen ersten Teil 20A, der an dem Halter 22 angeordnet ist, und einen zweiten Teil 20B, der sich von dem Halter 22 weg erstreckt. Auf diese Weise kann die elektrische Schaltung 20 bequem elektrische Signale an das Druckrohr 10 und die Abschirmung 12 anlegen, wie unten beschrieben, und andererseits bequem eine Verbindung zu anderen Komponenten, wie z.B. einer Energieversorgung und einer Motorsteuerung, bilden. Die zwei Teile 20A, 20B der elektrischen Schaltung 20 sind als einstückige Baugruppe ausgebildet, die als Ganzes an dem Halter 22 befestigt werden kann bzw. von diesem entfernt werden kann. Insbesondere kann die elektrische Schaltung 20 als Flexprint ausgebildet sein. Auf diese Weise kann die vergleichsweise komplexe geometrische Anordnung der elektrischen Schaltung 20 ermöglicht werden, wobei die inhärente Flexibilität auch bei der Anbringung der elektrischen Schaltung 20 an dem Halter 22 und bei der Integration der Pipettiereinheit 2 in einem Pipettiersystem zuträglich ist.

Die elektrische Schaltung 20 ist durch eine Schraube 26 und ein Gewindeloch 28 an dem Halter 22 befestigt. Das Gewindeloch 28 ist in Kontakt mit dem Druckrohr 10, so dass eine elektrische Verbindung zwischen Gewindeloch 28 und Druckrohr 10 besteht. Auch zwischen der Schraube 26 und dem Gewindeloch 28 besteht durch den mechanischen Kontakt eine elektrische Verbindung.

Die elektrische Schaltung 20 hat eine elektrische Verbindung zu der Schraube 26. Weiterhin hat die elektrische Schaltung 20 eine elektrische Verbindung zur Abwurffeder 30. Dementsprechend kann die elektrische Schaltung 20 ein elektrisches Signal bzw. ein elektrisches Potential an die Schraube 26 und die Abwurffeder 30 abgeben bzw. anlegen.

Im Betrieb führt die elektrische Schaltung 20 eine kapazitive Detektion eines Kontakts zwischen Pipettierspitze 4 und Pipettierflüssigkeit durch. In anderen Worten, die elektrische Schaltung 20 überwacht im Betrieb, ob ein Kontakt zwischen Pipettierspitze 4 und Pipettierflüssigkeit vorliegt oder nicht. Zu diesem Zweck gibt die elektrische Schaltung 20 ein zeitlich veränderliches elektrisches Signal an die Schraube 26 aus. Weiterhin legt die elektrische Schaltung 20 ein Masse-Potential an die Abwurffeder 30 an. Durch Anlegen an die Schraube 26 wird das zeitlich veränderliche elektrische Signal auch an das Gewindeloch 28, das Druckrohr 10, die Kopplung 14 und die Pipettierspitze 4 angelegt. Durch Anlegen eines Masse-Potentials an die Abwurffeder 30 liegt auch die Abschirmung 12 auf Masse.

In der beispielhaften Ausführungsform der Fig. 1 ist das zeitlich veränderliche elektrische Signal, welches von der elektrischen Schaltung 20 an die Schraube 26 angelegt wird, ein periodischer Spannungsverlauf bzw. ein Spannungsverlauf mit periodischen Signalabschnitten. Nach dem Prinzip eines Koaxialkabels schirmt das Masse-Potential auf der Abschirmung 12 das zeitlich veränderliche elektrische Signal ab. Insbesondere können Störeinflüsse, wie z.B. parasitäre Kapazitäten zwischen der Abschirmung 12 und der Umgebung der Pipettiereinheit 2, von dem Druckrohr 10 abgehalten werden. Auch kann der Einfluss von Störeinflüssen auf das gesamte von dem zeitlich veränderlichen elektrischen Signal angeregte System gering gehalten werden.

Anstelle des Masse-Potentials kann auch, nicht wie in der beanspruchten Erfindung, ein zweites zeitlich veränderliches elektrisches Signal von der elektrischen Schaltung 20 über die Abwurffeder 30 an die Abschirmung 12 angelegt werden. Dabei können das erste zeitlich veränderliche elektrische Signal, d.h. das an das Druckrohr 10 angelegte zeitlich veränderliche elektrische Signal, und das zweite zeitlich veränderliche elektrische Signal periodische Spannungsverläufe bzw. Spannungsverläufe mit periodischen Signalabschnitten sein. Insbesondere können das erste zeitlich veränderliche elektrische Signal und das zweite zeitlich veränderliche elektrische Signal synchronisiert an die Schraube 26 und die Abwurffeder 30 angelegt werden. Weiterhin können das erste zeitlich veränderliche elektrische Signal und das zweite zeitlich veränderliche elektrische Signal korrespondierende elektrische Signale sein, welche die gleiche Signalform aufweisen.

Auf diese Weise liegen korrespondierende elektrische Signale an dem Druckrohr 10 und den darum herum angeordneten Komponenten Abschirmung 12 und Abwurffeder 30 an. Ein möglicher nachteiliger Einfluss einer Kapazität zwischen Druckrohr 10 und Abschirmung 12 kann so besonders gering gehalten werden.

Das oben beschriebene, an die Schraube 26 angelegte zeitlich veränderliche elektrische Signal liegt bis zur Pipettierspitze 4 an, wobei die Komponenten Schraube 26, Gewindeloch 28, Druckrohr 10 und Kopplung 14 als Signalübertragungskomponenten verwendet werden. Das oben beschriebene Masse-Potential liegt an der Abschirmung 12 an, wobei die Komponente Abwurffeder 30 als elektrische Verbindungskomponente verwendet wird. Die elektrische Schaltung 20 kann daher mit in unmittelbarer Nähe befindlichen Komponenten verbunden werden und diese zum Anlegen des zeitlich veränderlichen elektrischen Signals und des Masse-Potentials nutzen. Die elektrische Schaltung 20 kann als einzelnes Bauelement dafür sorgen, das zeitlich veränderliche elektrische Signal zu erzeugen und das zeitlich veränderliche elektrische Signal sowie Masse an Druckrohr 10 und Abschirmung 12 bereitzustellen. Die elektrische Schaltung kann als integrales Schaltungsbauteil ausgeführt werden und kann kompakt ausgeführt werden.

Für die Detektion des Kontakts zwischen der Pipettierspitze 4 und der Pipettierflüssigkeit beobachtet die elektrische Schaltung 20 das Verhalten der Pipettiereinheit 2 und der daran angeschlossenen Pipettierspitze 4 in Reaktion auf das Anlegen des zeitlich veränderlichen elektrischen Signals. Bei dem oben beschriebenen Anlegen eines periodischen Spannungsverlaufs an die Schraube 26 kann die elektrische Schaltung 20 den in Reaktion auf diesen Spannungsverlauf auftretenden Stromfluss erfassen und auswerten. Aus dem Verhältnis von angelegter Spannung und resultierendem Stromfluss kann auf die elektrischen Eigenschaften der mit dem Signal angeregten Komponenten und deren Umgebung rückgeschlossen werden. Zum Beispiel kann das Verhältnis von Spannung und Strom ein Indikator für die Induktivitäten und Kapazitäten sein, die entlang der Signalübertragungsstrecke, bestehend aus Schraube 26, Gewindeloch 28, Druckrohr 10, Kopplung 14 und Pipettierspitze 4, vorliegen. Insbesondere kann aus dem Verhältnis von Spannung und Strom ein Rückschluss auf die Resonanzfrequenz des angeregten Systems ermöglicht werden. Aus Amplitude und/oder Phasenversatz des Stroms gegenüber der Spannung kann rückgeschlossen werden, wie gut das angeregte System mit dem periodischen Spannungsverlauf mitschwingt. Über den Strom kann eine erzwungene Schwingung des angeregten Systems während des Anlegens des periodischen Spannungsverlaufs beobachtet werden. Dabei macht es für die Kapazität des angeregten Systems, d.h. für die Kapazität des angeregten Schwingkreises, einen großen Unterschied, ob die Pipettierspitze 4 in eine Pipettierflüssigkeit eingetaucht ist oder frei in der Luft hängt. Das Eintauchen der Pipettierspitze 4 in eine Pipettierflüssigkeit geht mit einem Kapazitätssprung einher. Durch die Analyse des Stromflusses bei Anlegen des periodischen Spannungsverlaufs kann die elektrische Schaltung 20 einen solchen Kapazitätssprung detektieren. Insbesondere kann die elektrische Schaltung aus der Amplitude und/oder der Steigung und/oder dem Integral und/oder der Frequenz und/oder dem Phasenversatz des Stromflusses feststellen, ob es zu einer signifikanten Änderung der Kapazität gekommen ist. Eine solche signifikante Änderung kann als Eintauchen der Pipettierspitze 4 in die Pipettierflüssigkeit bzw. als Herausziehen der Pipettierspitze 4 aus der Pipettierflüssigkeit gewertet werden. Diese Information kann die elektrische Schaltung 20 an die Steuerung des Elektromotors der Pipettiereinheit 2 weitergeben, so dass das Aspirieren bzw. Dispensieren von Pipettierflüssigkeit stets bei einer definierten Eintauchtiefe in die Pipettierflüssigkeit stattfinden kann.

Anstelle der beschriebenen erzwungenen Schwingung des angeregten Systems ist es auch möglich, das System in einem ersten Schritt mit dem zeitlich veränderlichen elektrischen Signal, insbesondere mit einem periodischen zeitlich veränderlichen elektrischen Signal, anzuregen und in einem zweiten Schritt nach Beenden der Anregung eine freie Schwingung des angeregten Systems zu analysieren. Beispielsweise kann in dem ersten Schritt von der elektrischen Schaltung 20 ein periodischer Spannungsverlauf an die Schraube 26 angelegt werden. In dem zweiten Schritt kann die elektrische Schaltung 20 dann die freie Schwingung des angeregten Systems an Hand des an der Schraube anliegenden Spannungsverlaufs beobachten und daraus die Resonanzfrequenz des angeregten Systems bestimmen.

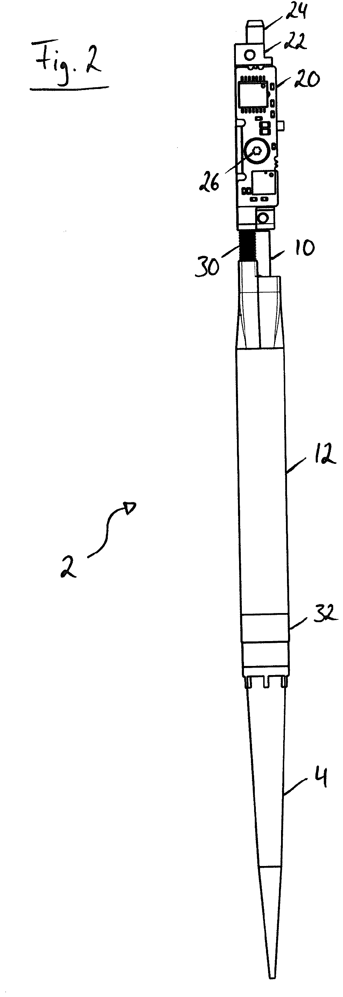

Fig. 2 zeigt die Kombination der Pipettiereinheit 2 und der angeschlossenen Pipettierspitze 4 der Fig. 1 in einer Seitenansicht. Insbesondere zeigt Fig. 2 die Pipettiereinheit 2 und die Pipettierspitze 4 in einer Seitenansicht von links in der Zeichenebene von Fig. 1. Im Bereich des Übergangs zwischen Abschirmung 12 und Halter 22 ist die Pipettiereinheit 2 teilweise als Seitenansicht und teilweise aufgeschnitten gezeigt. Der aufgeschnittene Teil legt die Sicht auf einen kurzen Abschnitt des Druckrohrs 10 frei, so dass der Anschluss des Druckrohrs 10 an den Halter 22 zu sehen ist. Ein kleiner Teil der Abschirmung 12, die daran anschließende Abwurffeder 30 und ein kleiner Teil des Halters 22 sind dementsprechend in Fig. 2 nur halb gezeigt. Es versteht sich, dass die Abwurffeder 30 und die Abschirmung 12 das Druckrohr 10 umgeben, auch in dem aufgeschnitten gezeigten Bereich.

In Fig. 2 ist ersichtlich, dass sich die elektrische Schaltung 20 über einen großen Teil der Seitenfläche des Halters 22 erstreckt. Es sind verschiedene elektrische/ elektronische Bauteile vorgesehen, welche beispielsweise die Aufgaben des Anlegens des zeitlich veränderlichen elektrischen Signals, des Bereitstellens des Masse-Anschlusses, der Analyse der Reaktion der Pipettiereinheit 2 und der Pipettierspitze 4 auf das zeitlich veränderliche elektrische Signal, die Kommunikation mit der Steuerung des Elektromotors, etc., erfüllen können.

Fig. 3 zeigt ein Pipettiersystem 100 gemäß einer beispielhaften Ausführungsform der Erfindung in einem Längsschnitt. Das Pipettiersystem 100 weist eine Pipettiereinheit 2 gemäß einer beispielhaften Ausführungsform der Erfindung auf. Die Pipettiereinheit 2 des Pipettiersystems 100 der Fig. 3 kann die Pipettiereinheit 2 der Fig. 1 und 2 sein, kann aber auch einen abgewandelten Aufbau haben. In Fig. 3 ist weiterhin ein Elektromotor 6 als Teil der Pipettiereinheit 2 gezeigt, der oben mit Bezug auf Fig. 1 und 2 schon angedeutet worden ist. Wie in Fig. 1 und 2 ist die Pipettiereinheit 2 in Fig. 3 mit einer angeschlossenen Pipettierspitze 4 gezeigt.

Durch die Anordnung der Pipettiereinheit 2 in dem Pipettiersystem 100 und die Verwendung in dem Pipettiersystem 100 ist die Pipettiereinheit 2 Bestandteil des Pipettiersystems 100. Fig. 3 zeigt die Pipettiereinheit 2 in derselben Längsschnittebene wie Fig. 1, allerdings spiegelverkehrt. Demzufolge ist auch das Pipettiersystem 100 in dieser Längsschnittebene dargestellt.

Das Pipettiersystem 100 hat ein Gehäuse 102, an dem die Pipettiereinheit 2 befestigt ist. Insbesondere ist die Pipettiereinheit 2 mittels des Halters 22 an dem Gehäuse 102 befestigt. Das Druckrohr 10 und die Abschirmung 12 der Pipettiereinheit 2 stehen aus dem Gehäuse 102 hervor. Insbesondere ragen das Druckrohr 10 und die Abschirmung 12 in der Zeichenebene der Fig. 3, welche der Betriebsausrichtung des Pipettiersystems 100 entspricht, nach unten aus dem Gehäuse 102 heraus. Das Druckrohr 10 erstreckt sich von innerhalb des Gehäuses 102 nach außerhalb des Gehäuses 102. Durch die Befestigung des Halters 22 an dem Gehäuse 102 ist das Druckrohr 10 ortsfest gegenüber dem Gehäuse 102 des Pipettiersystems.

Wie oben bereits erwähnt, kann die Pipettiereinheit 2 den mit Bezug auf Fig. 1 und 2 beschriebenen Aufbau haben. Es ist aber auch möglich, dass sich die Pipettiereinheit 2 von dem mit Bezug auf Fig. 1 und 2 beschriebenen Aufbau unterscheidet. Insbesondere ist die Pipettiereinheit 2 in der Fig. 3 so dargestellt, dass sich das Druckrohr 10 durch den ganzen Halter 22 erstreckt und selbst den Motoranschluss bildet. Außerdem ist die Abwurffeder 30 in Fig. 3 so dargestellt, dass sie eine Kraft zwischen dem Gehäuse 102 des Pipettiersystems 100 und der Abschirmung 12 ausübt. Auch in dieser Konfiguration ist die elektrische Schaltung der Pipettiereinheit 2 mit der Abwurffeder 30 zum Bereitstellen des Masse-Anschlusses verbunden.

Die Pipettiereinheit 2 der Fig. 3 weist einen Elektromotor 6 auf. Der Elektromotor 6 ist oberhalb des Halters 22 angeordnet. Der Druckrohr-Anschluss des Elektromotors 6, welcher unten mit Bezug auf Fig. 4 beschrieben wird, ist mit dem Motoranschluss des Halters 22 bzw. direkt mit dem Druckrohr 10 verbunden. In der beispielhaften Ausführungsform der Fig. 3 liegt der Elektromotor 6 als integrierte Baugruppe vor, die als ganzes in das Gehäuse 102 eingesetzt werden kann oder aus dem Gehäuse 102 entfernt werden kann. So kann der Elektromotor 6 im Rahmen einer Wartung des Pipettiersystems 100 oder bei anderen Problemen leicht ausgewechselt werden.

Das Aspirieren bzw. Dispensieren einer Pipettierflüssigkeit durch die Pipettierspitze 4 erfolgt über den Aufbau bzw. Abbau eines Gasdrucks in dem Druckluftvolumen, das in dem Inneren des Elektromotors 6, in dem Druckrohr 10 und in der Pipettierspitze 4 gebildet ist. Der Aufbau bzw. Abbau des Gasdrucks erfolgt durch die Bewegung eines Kolbens in dem Elektromotor, wie unten mit Bezug auf Fig. 4 beschrieben.

Die Steuerung des Aufbaus bzw. des Abbaus des Gasdrucks kann dadurch initiiert werden, dass ein Kontakt zwischen der Pipettierspitze 4 und einer Pipettierflüssigkeit mittels der elektrischen Schaltung 20 detektiert worden ist. Der Kontakt zwischen Pipettierspitze 4 und der Pipettierflüssigkeit wird dadurch erreicht, dass die Pipettiereinheit 2 vertikal bewegt wird. Während der vertikalen Bewegung findet die oben beschriebene Detektion des Vorliegens bzw. Nicht-Vorliegens des Kontakts zwischen Pipettierspitze 4 und Pipettierflüssigkeit statt. Zur Veranschaulichung zeigt Fig. 3 ein Behältnis 110, in dem Pipettierflüssigkeit 112 vorhanden ist. Durch vertikale Bewegung der Pipettiereinheit 2 kann ein Kontakt zwischen Pipettierspitze 4 und Pipettierflüssigkeit 112 hergestellt werden, und durch Aufbau bzw. Abbau des Gasdrucks in dem Druckrohr 10 mittels des Elektromotors 6 kann dann Pipettierflüssigkeit aspiriert bzw. dispensiert werden.

In Fig. 3 ist das Pipettiersystem 100 aus Übersichtlichkeitsgründen mit einer Pipettiereinheit 2 und einer Pipettierspitze 4 gezeigt. Es versteht sich, dass das Pipettiersystem 100 eine Mehrzahl von Pipettiereinheiten 2, jeweils mit eigenem Elektromotor 6, aufweisen kann. An jede dieser Mehrzahl von Pipettiereinheiten 2 kann eine Pipettierspitze 4 temporär befestigt werden, d.h. angekoppelt und abgekoppelt werden. Beispielsweise können 96 Pipettiereinheiten 2 vorgesehen sein, die in einem genormten Raster in dem Pipettiersystem 100 angeordnet sein können. Auch ist es möglich, dass die Mehrzahl von Pipettiereinheiten 2 einzeln vertikal bewegt werden können, um jeweils einzeln in ausgewählte Behältnisse mit Pipettierflüssigkeit eingetaucht zu werden.

Fig. 4 zeigt einen Elektromotor 6 in einem Längsschnitt, der in einer Pipettiereinheit gemäß einer beispielhaften Ausführungsform der Erfindung verwendet werden kann. Der Elektromotor 6 der Fig. 4 kann in dem Pipettiersystem 100 der Fig. 3 verwendet werden. Insbesondere kann der Elektromotor 6 der Fig. 4 den gleichen Aufbau haben wie der Elektromotor 6 der Fig. 3.

Der Elektromotor 6 hat ein Gehäuse 64, in dem eine Vielzahl von Komponenten untergebracht sind. Aus dem Gehäuse 64 ragen ein Stromanschluss 68 und ein Führungselement 72 heraus. Das Führungselement 72 dient dazu, das Druckrohr-ferne Ende des Elektromotors 6 zuverlässig in dem Gehäuse des Pipettiersystems zu positionieren.

In dem Gehäuse 64 ist im Wesentlichen mittig ein zylindrisches Führungsrohr 74 angeordnet. Das Führungsrohr 74 endet in einem Druckrohr-zugewandten Endbereich 92 in einem Druckrohr-Anschluss 66. Der Druckrohr-Anschluss 66 ist in der beispielhaften Ausführungsform der Fig. 4 integral mit dem Führungsrohr 74 ausgebildet. Insbesondere bildet ein Endbereich des Führungsrohrs 74 den Druckrohr-Anschluss 66. In dem Druckrohr-abgewandten Endbereich 94 ist eine Anschlag-Luftfilter-Einheit 90 vorgesehen. Die Anschlag-Luftfilter-Einheit 90 verhindert das Eindringen von Staub in das Führungsrohr 74 und bildet das Ende der Bewegungsbahn eines unten beschriebenen, in dem Führungsrohr 74 angeordneten Kolbens 76.

Um das Führungsrohr 74 herum ist eine Mehrzahl von Spulen 80 angeordnet, von denen nur eine mit einem entsprechenden Bezugszeichen versehen ist. In der beispielhaften Ausführungsform der Fig. 4 sind zwanzig Spulen 80 vorhanden. Die Spulen 80 sind kreisförmig um das Führungsrohr 74 herum angeordnet. Sie sind aneinander angrenzend entlang des Führungsrohrs 74 angeordnet, z.B. aneinander auf das Führungsrohr 74 aufgeschoben. Die Mehrzahl von Spulen 80 ist mit dem Stromanschluss 68 verbunden, der einerseits entlang der Spulen 80 von dem Druckrohr-zugewandten Endbereich 92 bis in den Druckrohr-abgewandten Endbereich 94 verläuft und andererseits aus dem Gehäuse 64 hervorsteht. Die Spulen 80 werden über den Stromanschluss 68 mit Energie versorgt. Sie wirken im Betrieb des Elektromotors 6 als Elektromagneten.

In der beispielhaften Ausführungsform der Fig. 4 ist in dem Stromanschluss 68 für jede der Spulen 80 eine Leiterbahn vorgesehen, um die Spulen 80 mit Strom zu versorgen. Es ist auch möglich, das jeweils mehrere Spulen 80 mit Strom von einer Leiterbahn des Stromanschlusses 68 versorgt werden. Insbesondere ist es möglich, dass drei Strom-Phasen über den Stromanschluss 68 zur Verfügung gestellt werden, wobei an jeder Spule 80 eine der drei Strom-Phasen anliegt.

In dem Führungsrohr 74 ist ein Kolben 76 angeordnet. Der Kolben 76 hat auf seiner Druckrohr-zugewandten Seite wie auf seiner Druckrohr-abgewandten Seite jeweils eine Abdichtung 84. Durch die Abdichtungen 84 sind das Luftvolumen zwischen dem Kolben 76 und dem Druckrohr-Anschluss 66 einerseits sowie zwischen dem Kolben 76 und der Anschlag-Luftfilter-Einheit 90 andererseits voneinander getrennt.

Der Kolben 76 weist sechs Permanentmagnete 78 auf, die jeweils die gleiche Länge entlang des Kolbens 76 haben. Die Permanentmagnete 78 sind jeweils mit gleichsinnigen Polen zueinander in dem Kolben 76 angeordnet. Eine Beispielhafte Anordnung der Permanentmagnete 78 wäre SN-NS-SN-NS-SN-NS, wobei der Bindestrich jeweils die Grenze zwischen den einzelnen Permanentmagneten bezeichnet. In Fig. 4 sind die Grenzen zwischen den Permanentmagneten 78 durch Doppelstriche gekennzeichnet. Durch die Permanentmagnete 78 erzeugt der Kolben 76 ein Magnetfeld mit alternierenden Süd- und Nordpolen, die durch die Anordnung mit jeweils gegensätzlichen Polen zueinander äußerst trennscharf ausgebildet sind.

In dem Gehäuse 64 ist weiterhin eine Mehrzahl von Magnetfeld-Sensoren 82 angeordnet. Die Magnetfeld-Sensoren 82 sind entlang des Führungsrohrs 74, außerhalb der Mehrzahl von Spulen 80 und entlang einer Wand des Gehäuses 64 angeordnet. Insgesamt sind zwanzig Magnetfeld-Sensoren entlang des Führungsrohrs 74 angeordnet, wobei das Bezugszeichen 82 aus Übersichtlichkeitsgründen nur einmal auftaucht. Die Mehrzahl von Magnetfeld-Sensoren 82 sind im vorliegenden Beispiel Hall-Sensoren. Sie messen das an den jeweiligen Stellen des Elektromotors 6 vorherrschende Magnetfeld. Die Messwerte können zur Bestimmung der Position des Kolbens 76 herangezogen werden.

In dem Gehäuse 64 des Elektromotors 6 ist weiterhin ein Kühlungsschacht 86 angeordnet. Der Kühlungsschacht 86 ist entlang einer Wand des Gehäuses 64 angeordnet, und zwar auf der gegenüberliegenden Seite, bezogen auf das Führungsrohr 74, im Vergleich zu der Mehrzahl von Magnetfeld-Sensoren 82. Der Kühlungsschacht 86 erstreckt sich im Wesentlichen von dem Druckrohr-zugewandten Endbereich 92 des Gehäuses 64 zu dem Druckrohr-abgewandten Endbereich 94 des Gehäuses 64. Der Kühlungsschacht 86 hat an beiden Enden eine Öffnung durch das Gehäuse 64, so dass Kühlluft von außen durch den Kühlungsschacht 86 strömen kann.

Der Betrieb des Elektromotors 6 ist im Folgenden beschrieben. Die Mehrzahl von Spulen 80 werden über den Stromanschluss 68 mit Strom beaufschlagt. Durch das Anlegen geeigneter Ströme an die Mehrzahl von Spulen 80 werden zeitlich veränderliche Magnetfelder erzeugt, welche auf die Permanentmagnete 78 des Kolbens 76 eine mechanische Kraft ausüben und diesen innerhalb des Führungsrohrs 74 bewegen. Es ist dem Fachmann bekannt, wie er den Stromfluss durch die Mehrzahl von Spulen 80 ausgestalten muss, um eine gewünschte Bewegung des Kolbens 76 zu erzielen. Demzufolge kann auf eine genauere Beschreibung der Zusammenhänge zwischen der Bewegung des Kolbens 76 und den anzulegenden Strömen durch die Spulen 80 verzichtet werden.

Während des Betriebs messen die Mehrzahl von Magnetfeld-Sensoren 82 das an den jeweiligen Stellen innerhalb des Gehäuses 64 vorherrschende Magnetfeld. Sie übermitteln die Messwerte an eine Steuereinheit des Elektromotors 6. Diese Steuereinheit ist in der Lage, aus den Messwerten der Magnetfeld-Sensoren 82 die Position des Kolbens 76 zu bestimmen. Auf Basis dieser Information, auf Basis der Information über einen Kontakt zwischen Pipettierspitze und Pipettierflüssigkeit und auf Basis eines gewünschten Aspirations- bzw. Dispensationsvorgangs beaufschlagt die Steuereinheit die Mehrzahl von Spulen 80 über den Stromanschluss 68 mit entsprechenden Strömen, so dass die gewünschte Bewegung des Kolbens 76 erfolgt. Zwischen Kolben 76, Magnetfeld-Sensoren 82, Steuereinheit, Stromanschluss 68, und Spulen 80 kann eine Regelschleife bestehen, die eine hoch präzise Positionierung des Kolbens 76 innerhalb des Führungsrohrs 74 ermöglicht.

Obwohl die Erfindung mit Bezug auf beispielhafte Ausführungsformen beschrieben worden ist, ist es für einen Fachmann ersichtlich, dass verschiedene Änderungen vorgenommen und Äquivalente verwendet werden können, ohne den Bereich der Erfindung zu verlassen. Die Erfindung soll nicht durch die beschriebenen spezifischen Ausführungsformen beschränkt sein. Vielmehr enthält sie alle Ausführungsformen, die unter die angehängten Patentansprüche fallen.

## Patentansprüche

1. Pipettiereinheit (2) mit kapazitiver Flüssigkeitsdetektion, aufweisend:
ein Druckrohr (10);
eine Abschirmung (12), die um das Druckrohr (10) herum angeordnet ist und die gegenüber dem Druckrohr (10) beweglich gelagert ist;
eine Kopplung (14) zum temporären Befestigen einer Pipettierspitze (4) an der Pipettiereinheit (2), wobei bei angeschlossener Pipettierspitze (4) eine elektrische Verbindung zwischen dem Druckrohr (10) und der Pipettierspitze (4) über die Kopplung (14) besteht;
eine Abwurffeder (30), welche an einem Pipettierspitzen-fernen Endbereich der Abschirmung (12) angeordnet ist, wobei die Abschirmung (12) durch die Abwurffeder (30) zur Ausübung einer Abwurfkraft auf eine angeschlossene Pipettierspitze (4) bewegbar ist; und
eine elektrische Schaltung (20), die mit dem Druckrohr (10) gekoppelt ist und die über die Abwurffeder (30) mit der Abschirmung (12) gekoppelt ist,
wobei die elektrische Schaltung (20) eingerichtet ist, ein zeitlich veränderliches elektrisches Signal an das Druckrohr (10) anzulegen, über welches bei angeschlossener Pipettierspitze (4) eine kapazitive Detektion eines Kontakts zwischen Pipettierspitze (4) und Pipettierflüssigkeit (112) möglich ist, und
wobei die elektrische Schaltung (20) eingerichtet ist, die Abschirmung (12) über die Abwurffeder (30) auf Masse zu legen.

2. Pipettiereinheit (2) nach Anspruch 1, wobei das zeitlich veränderliche elektrische Signal ein periodisches Signal ist.

3. Pipettiereinheit (2) nach Anspruch 1 oder 2, wobei die elektrische Schaltung (20) eingerichtet ist, bei Anlegen des zeitlich veränderlichen elektrischen Signals eine Resonanzfrequenz des angeregten Systems zu bestimmen;
wobei die elektrische Schaltung (20) insbesondere eingerichtet ist, das zeitlich veränderliche elektrische Signal wiederholt bzw. kontinuierlich an das Druckrohr anzulegen und auf Basis einer Änderung der Resonanzfrequenz des angeregten Systems den Kontakt zwischen Pipettierspitze (4) und Pipettierflüssigkeit (112) zu detektieren.

4. Pipettiereinheit (2) nach einem der vorhergehenden Ansprüche, wobei die elektrische Schaltung (20) eingerichtet ist, einen zeitlichen Verlauf einer elektrischen Größe an dem Druckrohr (10) zu empfangen und aus dem zeitlichen Verlauf der elektrischen Größe an dem Druckrohr (10) einen Kontakt zwischen Pipettierspitze (4) und Pipettierflüssigkeit (112) zu detektieren;
wobei die elektrische Schaltung (20) insbesondere eingerichtet ist, den zeitlichen Verlauf der elektrischen Größe bezüglich Amplitude und/oder Steigung und/ oder Integral und/oder Frequenz und/oder Phase zu analysieren und darauf basierend einen Kontakt zwischen Pipettierspitze (4) und Pipettierflüssigkeit (112) zu detektieren.

5. Pipettiereinheit (2) nach einem der vorhergehenden Ansprüche,
wobei die elektrische Schaltung (20) in Form eines integralen Schaltungsbauteils ausgeführt ist;
und/oder
wobei die elektrische Schaltung (20) als Schaltung mit gedruckten Leiterbahnen ausgeführt ist;
und/oder
wobei die elektrische Schaltung (20) als Flexprint, insbesondere als mehrlagiges Flexprint, ausgeführt ist.

6. Pipettiereinheit (2) nach einem der vorhergehenden Ansprüche, wobei die elektrische Schaltung (20) mit einer Schraube (26) an der Pipettiereinheit (2) fixiert ist und wobei die elektrische Schaltung (20) über die Schraube (26) mit dem Druckrohr (10) gekoppelt ist;
wobei die elektrische Schaltung (20) insbesondere über die Schraube (26) und ein Gewindeloch (28) bzw. eine Schraubenmutter mit dem Druckrohr gekoppelt ist.

7. Pipettiereinheit (2) nach einem der vorhergehenden Ansprüche,
wobei die Abwurffeder (30) koaxial um das Druckrohr (10) herum angeordnet ist;
und/oder
wobei die Abwurffeder (30) aus Stahl, insbesondere aus rostfreiem Stahl, weiter insbesondere aus Chromstahl, gefertigt ist.

8. Pipettiereinheit (2) nach einem der vorhergehenden Ansprüche, weiterhin aufweisend eine Isolation (32), die an einem Pipettierspitzen-zugewandten Endbereich der Abschirmung (12) angeordnet ist, insbesondere zwischen der Abschirmung (12) und der Kopplung (14) und/oder einer angeschlossenen Pipettierspitze (4) angeordnet ist.

9. Pipettiereinheit (2) nach einem der vorhergehenden Ansprüche, wobei die Abschirmung (12) koaxial zu dem Druckrohr (10) angeordnet ist.

10. Pipettiereinheit (2) nach einem der vorhergehenden Ansprüche, wobei die Kopplung (14) eine aktive Kopplung, insbesondere eine Hubmagnet-getriebene Kopplung, zum Fixieren bzw. Freigeben einer Pipettierspitze (4) ist.

11. Pipettiereinheit (2) nach einem der vorhergehenden Ansprüche, weiterhin aufweisend einen Linearmotor (6), der mit dem Druckrohr (10) verbunden ist, wobei ein Kolben (76) beweglich in dem Linearmotor (6) angeordnet ist und wobei durch eine Bewegung des Kolbens (76) Druckänderungen in dem Druckrohr (10) zum Aspirieren bzw. Dispensieren von Pipettierflüssigkeit (112) möglich sind.

12. Kombination einer Pipettiereinheit (2) und einer Pipettierspitze (4), aufweisend:
eine Pipettiereinheit (2) nach einem der vorhergehenden Ansprüche; und
eine leitfähige Pipettierspitze (4), die an der Pipettiereinheit (2) befestigbar ist;
wobei die Pipettierspitze (4) insbesondere eine Einmal-Pipettierspitze ist,
und/oder
wobei die Pipettierspitze (4) insbesondere aus leitfähigem Polymermaterial hergestellt ist.

13. Pipettiersystem (100), aufweisend eine Mehrzahl von Pipettiereinheiten (2), von denen jede nach einem der Ansprüche 1 bis 11 ausgeführt ist, insbesondere aufweisend 96 Pipettiereinheiten (2), von denen jede nach einem der Ansprüche 1 bis 11 ausgeführt ist.

14. Verfahren zum kapazitiven Detektieren von Pipettierflüssigkeit (112) durch eine Pipettiereinheit (2), aufweisend:
Anlegen eines zeitlich veränderlichen elektrischen Signals an ein Druckrohr (10) der Pipettiereinheit (2), von dem aus das zeitlich veränderliche elektrische Signal über eine Kopplung (14) an einer temporär befestigten Pipettierspitze (4) anliegt
Bereitstellen eines Masse-Anschlusses für eine Abschirmung (12) der Pipettiereinheit (2), die um das Druckrohr (10) herum angeordnet ist und gegenüber dem Druckrohr (10) beweglich gelagert ist,
wobei der Masse-Anschluss für die Abschirmung (12) über eine Abwurffeder (30) bereitgestellt wird, welche an einem Pipettierspitzen-fernen Endbereich der Abschirmung (12) angeordnet ist, wobei die Abschirmung (12) durch die Abwurffeder (30) zur Ausübung einer Abwurfkraft auf eine angeschlossene Pipettierspitze (4) bewegbar ist, und
wobei das zeitlich veränderliche elektrische Signal und der Masse-Anschluss von einer gemeinsamen elektrischen Schaltung (20) bereitgestellt werden; und
Detektieren eines Kontakts zwischen der Pipettierspitze (4) und der Pipettierflüssigkeit (112) mittels des zeitlich veränderlichen elektrischen Signals.

15. Computerprogramm, welches Programmanweisungen enthält, die bei Ausführung auf einer Datenverarbeitungsanlage ein Verfahren nach Anspruch 14 durchführen.

## Claims

1. A pipetting unit (2) with capacitive liquid detection, comprising:
a pressure tube (10);
a shield (12) disposed around the pressure tube (10) and movably supported relative to the pressure tube (10); and
a coupling (14) for temporarily attaching a pipetting tip (4) to the pipetting unit (2), wherein an electrical connection is established between the pressure tube (10) and the pipetting tip (4) via the coupling (14), when the pipetting tip (4) is connected;
an ejection spring (30) arranged at an end portion of the shield (12) distal from the pipetting tip, wherein the shield (12) is movable for exerting an ejection force on a connected pipetting tip (4) via the ejection spring (30);
and
an electric circuit (20) coupled to the pressure tube (10) and coupled to the shield (12) via the ejection spring (30),
wherein the electric circuit (20) is configured to apply a time-variable electrical signal to the pressure tube (10), said time-variable electrical signal permitting a capacitive detection of a contact between the pipetting tip (4) and a pipetting liquid (112) when the pipetting tip (4) is connected, and
wherein the electric circuit (20) is configured to connect the shield (12) to ground via the ejection spring (30).

2. The pipetting unit (2) according to claim 1,
wherein the time-variable electrical signal is a periodic signal.

3. The pipetting unit (2) according to claim 1 or 2,
wherein the electric circuit (20) is configured to determine a resonant frequency of the excited system when the time-variable electrical signal is applied;
wherein the electric circuit (20) is in particular configured to repeatedly or continuously apply the time-variable electrical signal to the pressure tube and to detect the contact between the pipetting tip (4) and the pipetting liquid (112) on the basis of a change in the resonant frequency of the excited system.

4. The pipetting unit (2) according to any of the preceding claims,
wherein the electric circuit (20) is configured to receive a time course of an electrical variable at the pressure tube (10) and to detect a contact between the pipetting tip (4) and the pipetting liquid (112) from the time course of the electrical variable at the pressure tube (10):
wherein the electric circut (20) is in particular configured to analyze the time course of the electrical variable with respect to amplitude and/or slope and/ or integral and/or frequency and/or phase and, based thereon, to detect a contact between the pipetting tip (4) and the pipetting liquid (112).

5. The pipetting unit (2) according to any of the preceding claims,
wherein the electric circuit (20) is implemented in the form of an integrated circuit component;
and/or
wherein the electric circuit (20) is implemented as a circuit with printed conductor paths;
and/or
wherein the electric circuit (20) is implemented as a flexprint, in particular as a multilayer flexprint.

6. The pipetting unit (2) according to any of the preceding claims,
wherein the electric circuit (20) is fixed to the pipetting unit (2) by means of a screw (26) and wherein the electric circuit (20) is coupled to the pressure tube (10) via the screw (26);
wherein the electric circuit (20) is in particular coupled to the pressure tube via the screw (26) and a threaded hole (28) or a screw nut.

7. The pipetting unit (2) according to any of the preceding claims,
wherein the ejection spring (30) is arranged coaxially around the pressure tube (10);
and/or
wherein the ejection spring (30) is made of steel, in particular stainless steel, further in particular chrome steel.

8. The pipetting unit (2) according to any of the preceding claims,
further comprising an isolator (32) arranged at an end portion of the shield (12) facing the pipetting tip (4), in particular arranged between the shield (12) and the coupling (14) and/or a connected pipetting tip (4).

9. The pipetting unit (2) according to any of the preceding claims,
wherein the shield (12) is arranged coaxially with respect to the pressure tube (10).

10. The pipetting unit (2) according to any of the preceding claims,
wherein the coupling (14) is an active coupling, in particular a solenoid-driven coupling, for fixing or releasing a pipetting tip (4).

11. The pipetting unit (2) according to any of the preceding claims,
further comprising a linear motor (6) connected to the pressure tube (10), wherein a piston (76) is movably arranged in the linear motor (6) and wherein pressure changes in the pressure tube (10) for aspirating or dispensing pipetting liquid (112) are possible by movement of the piston (76).

12. A combination of a pipetting unit (2) and a pipetting tip (4), comprising:
a pipetting unit (2) according to any of the preceding claims; and
a conductive pipetting tip (4) attachable to the pipetting unit (2);
wherein the pipetting tip (4) is in particular a disposable pipetting tip,
and/or
wherein the pipetting tip (4) is in particular made of conductive polymer material.

13. A pipetting system (100) comprising a plurality of pipetting units (2), which are each designed according to any of claims 1 to 11, wherein the pipetting system (100) in particular comprises 96 pipetting units (2), which are each designed according to any of claims 1 to 11.

14. A method for capacitively detecting pipetting liquid (112) by a pipetting unit (2), comprising:
applying a time-variable electrical signal to a pressure tube (10) of the pipetting unit (2), from which the time-variable electrical signal is applied to a temporarily attached pipetting tip (4) via a coupling (14);
providing a ground connection for a shield (12) of the pipetting unit (2) that is arranged around the pressure tube (10) and that is movably supported relative to the pressure tube (10),
wherein the ground connection for the shield (12) is provided via an ejection spring (30), which is arranged at an end portion of the shield (12) distal from the pipetting tip, wherein the shield (12) is movable for exerting an ejection force on a connected pipetting tip (4) via the ejection spring (30), and
wherein the time-variable electrical signal and the ground connection are provided by a common electric circuit (20); and
detecting a contact between the pipetting tip (4) and the pipetting liquid (112) by means of the time-variable electrical signal.

15. A computer program including program instructions which, when executed on a data processing system, effect a method according to claim 14.

## Revendications

1. Une unité de pipetage (2) avec détection capacitive de liquide, comprenant :
un tube de pression (10) ;
un blindage (12) qui est disposé autour du tube de pression (10) et qui est monté de manière mobile par rapport au tube de pression (10) ;
un couplage (14) pour fixer temporairement une pointe de pipetage (4) à l'unité de pipetage (2), où, lorsqu'une pointe de pipetage (4) est connectée, une connexion électrique entre le tube de pression (10) et la pointe de pipetage (4) existe via le couplage (14) ;
un ressort de décharge (30), qui est disposé à une extrémité éloignée de la pointe de pipetage du blindage (12), où le blindage (12) est mobile par le ressort de décharge (30) pour exercer une force de décharge sur une pointe de pipetage (4) connectée ;
et
un circuit électrique (20), qui est couplé au tube de pression (10) et qui est couplé au blindage (12) via le ressort de décharge (30),
où le circuit électrique (20) est configuré pour appliquer un signal électrique variable dans le temps au tube de pression (10), permettant, lorsqu'une pointe de pipetage (4) est connectée, une détection capacitive d'un contact entre la pointe de pipetage (4) et le liquide de pipetage (112), et
où le circuit électrique (20) est configuré pour mettre le blindage (12) à la masse via le ressort de décharge (30).

2. L'unité de pipetage (2) selon la revendication 1, où le signal électrique variable dans le temps est un signal périodique.

3. L'unité de pipetage (2) selon la revendication 1 ou 2, où le circuit électrique (20) est configuré pour déterminer une fréquence de résonance du système excité lors de l'application du signal électrique variable dans le temps ;
où le circuit électrique (20) est notamment configuré pour appliquer de manière répétée ou continue le signal électrique variable dans le temps au tube de pression et, sur la base d'un changement de la fréquence de résonance du système excité, détecter le contact entre la pointe de pipetage (4) et le liquide de pipetage (112).

4. L'unité de pipetage (2) selon l'une des revendications précédentes, où le circuit électrique (20) est configuré pour recevoir une évolution temporelle d'une grandeur électrique au tube de pression (10) et, à partir de l'évolution temporelle de la grandeur électrique au tube de pression (10), détecter un contact entre la pointe de pipetage (4) et le liquide de pipetage (112) ;
où le circuit électrique (20) est notamment configuré pour analyser l'évolution temporelle de la grandeur électrique en termes d'amplitude et/ou de pente et/ou d'intégrale et/ou de fréquence et/ou de phase et, sur cette base, détecter un contact entre la pointe de pipetage (4) et le liquide de pipetage (112).

5. L'unité de pipetage (2) selon l'une des revendications précédentes,
où le circuit électrique (20) est réalisé sous forme d'un composant de circuit intégré ; et/ou
où le circuit électrique (20) est réalisé sous forme de circuit avec des pistes conductrices imprimées ;
et/ou
où le circuit électrique (20) est réalisé sous forme de circuit flexible, notamment sous forme de circuit flexible multicouche.

6. L'unité de pipetage (2) selon l'une des revendications précédentes, où le circuit électrique (20) est fixé à l'unité de pipetage (2) par une vis (26) et où le circuit électrique (20) est couplé au tube de pression (10) via la vis (26) ;
où le circuit électrique (20) est notamment couplé au tube de pression via la vis (26) et un trou fileté (28) ou un écrou.

7. L'unité de pipetage (2) selon l'une des revendications précédentes,
où le ressort de décharge (30) est disposé de manière coaxiale autour du tube de pression (10) ;
et/ou
où le ressort de décharge (30) est fabriqué en acier, notamment en acier inoxydable, plus particulièrement en acier au chrome.

8. L'unité de pipetage (2) selon l'une des revendications précédentes, comprenant en outre une isolation (32), qui est disposée à une extrémité du blindage (12) orientée vers la pointe de pipetage, notamment entre le blindage (12) et le couplage (14) et/ou une pointe de pipetage (4) connectée.

9. L'unité de pipetage (2) selon l'une des revendications précédentes, où le blindage (12) est disposé de manière coaxiale par rapport au tube de pression (10).

10. L'unité de pipetage (2) selon l'une des revendications précédentes, où le couplage (14) est un couplage actif, notamment un couplage entraîné par un électroaimant, pour fixer ou libérer une pointe de pipetage (4).

11. L'unité de pipetage (2) selon l'une des revendications précédentes, comprenant en outre un moteur linéaire (6), qui est connecté au tube de pression (10), où un piston (76) est disposé de manière mobile dans le moteur linéaire (6) et où, par un mouvement du piston (76), des changements de pression dans le tube de pression (10) permettent d'aspirer ou de dispenser du liquide de pipetage (112).

12. Combinaison d'une unité de pipetage (2) et d'une pointe de pipetage (4), comprenant :
une unité de pipetage (2) selon l'une des revendications précédentes ; et une pointe de pipetage (4) conductrice, qui peut être fixée à l'unité de pipetage (2) ; où la pointe de pipetage (4) est notamment une pointe de pipetage à usage unique,
et/ou
où la pointe de pipetage (4) est notamment fabriquée en matériau polymère conducteur.

13. Système de pipetage (100), comprenant une pluralité d'unités de pipetage (2), dont chacune est réalisée selon l'une des revendications 1 à 11, comprenant notamment 96 unités de pipetage (2), dont chacune est réalisée selon l'une des revendications 1 à 11.

14. Procédé de détection capacitive de liquide de pipetage (112) par une unité de pipetage (2), comprenant :
l'application d'un signal électrique variable dans le temps à un tube de pression (10) de l'unité de pipetage (2), à partir duquel le signal électrique variable dans le temps est appliqué à une pointe de pipetage (4) temporairement fixée via un couplage (14) ;
la fourniture d'une connexion à la masse pour un blindage (12) de l'unité de pipetage (2), qui est disposé autour du tube de pression (10) et monté de manière mobile par rapport au tube de pression (10),
où la connexion à la masse pour le blindage (12) est fournie via un ressort de décharge (30), qui est disposé à une extrémité éloignée de la pointe de pipetage du blindage (12), où le blindage (12) est mobile par le ressort de décharge (30) pour exercer une force de décharge sur une pointe de pipetage (4) connectée, et
où le signal électrique variable dans le temps et la connexion à la masse sont fournis par un circuit électrique (20) commun ; et
la détection d'un contact entre la pointe de pipetage (4) et le liquide de pipetage (112) au moyen du signal électrique variable dans le temps.

15. Programme informatique, contenant des instructions de programme qui, lorsqu'elles sont exécutées sur un système de traitement de données, réalisent un procédé selon la revendication 14.
